(19) Europäisches Patentamt
European Patent Office
Office européen des brevets

(11) **EP 3 792 594 A1**

(12) **EUROPEAN PATENT APPLICATION**
published in accordance with Art. 153(4) EPC

(43) Date of publication:
**17.03.2021 Bulletin 2021/11**

(21) Application number: **19800774.2**

(22) Date of filing: **16.04.2019**

(51) Int Cl.:
*G01C 17/38* (2006.01)    *G01C 21/26* (2006.01)
*G01C 21/28* (2006.01)

(86) International application number:
**PCT/JP2019/016338**

(87) International publication number:
**WO 2019/216133 (14.11.2019 Gazette 2019/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.05.2018   JP 2018090917**

(71) Applicant: **Sony Corporation**
**108-0075 Tokyo (JP)**

(72) Inventor: **KIMISHIMA, Masato**
**Tokyo 108-0075 (JP)**

(74) Representative: **2SPL Patentanwälte PartG mbB**
**Postfach 15 17 23**
**80050 München (DE)**

(54) **INFORMATION PROCESSING DEVICE, INFORMATION PROCESSING METHOD, AND PROGRAM**

(57)   [Overview]

[Problem to be Solved] To provide an information processing apparatus that is able to more accurately detect an azimuth during traveling of a mobile object.

[Solution] An information processing apparatus including a north-seeking process controller that performs a north-seeking process on a basis of, among pieces of information related to a mobile object, at least two pieces of information, in which orientations of the mobile object at respective timings when the at least two pieces of information are measured by an inertial measurement unit are different from each other, and at least one of the at least two pieces of information measured by the inertial measurement unit is measured while the mobile object is traveling.

[ FIG.4 ]

**Description**

Technical Field

The present disclosure relates to an information processing apparatus, an information processing method, and a program.

Background Art

Techniques for performing navigation on traveling of a mobile object on the basis of an azimuth detected by an electromagnetic compass, a global navigation satellite system (GNSS), or the like are currently in widespread use.
In relation to the above-described techniques, for example, PTL 1 discloses a technique that detects an azimuth on the basis of an angular velocity to be detected by a gyro sensor and geomagnetic data to be detected by a geomagnetic sensor.

Citation List

Patent Literature

PTL 1: Japanese Unexamined Patent Application Publication No. 2013-057601

Summary of the Invention

Problems to be Solved by the Invention

However, the geomagnetic sensor used in the above technique is easily influenced by magnetic noise generated from reinforcing bars or the like, and errors due to such magnetic noise occurs in a direction to be detected. Places that are largely influenced by the magnetic noise therefore reduce accuracy of the azimuth to be detected.
As a technique for detecting an azimuth without being influenced by such a surrounding environment, there is given a method using a gyrocompass. The gyrocompass is a device having a function of detecting the north direction on the basis of the earth's rotation component to be detected. However, strict stillness is often demanded for the detection of the azimuth by the gyrocompass. The navigation on the mobile object is typically performed during traveling, such a demand for stillness may limit behavior of the mobile object.
Accordingly, the present disclosure proposes an information processing apparatus, an information processing method, and a program that are novel and improved, and are able to more accurately detect an azimuth during traveling of a mobile object.

Means for Solving the Problems

According to the present disclosure, there is provided an information processing apparatus including a north-seeking process controller that performs a north-seeking process on a basis of, among pieces of information related to a mobile object, at least two pieces of information, in which orientations of the mobile object at respective timings when the at least two pieces of information are measured by an inertial measurement unit are different from each other, and at least one of the at least two pieces of information measured by the inertial measurement unit is measured while the mobile object is traveling.
Further, according to the present disclosure, there is provided an information processing method executed by a processor, the method including: performing a north-seeking process on a basis of, among pieces of information related to a mobile object, at least two pieces of information; causing orientations of the mobile object at respective timings when the at least two pieces of information are measured by an inertial measurement unit to be different from each other; and causing at least one of the at least two pieces of information measured by the inertial measurement unit to be measured while the mobile object is traveling.
Further, according to the present disclosure, there is provided a program for causing a computer to function as a north-seeking process controller that performs a north-seeking process on a basis of, among pieces of information related to a mobile object, at least two pieces of information, in which orientations of the mobile object at respective timings when the at least two pieces of information are measured by an inertial measurement unit are different from each other, and at least one of the at least two pieces of information measured by the inertial measurement unit is measured while the mobile object is traveling.

Effects of the Invention

As described above, according to the present disclosure, it is possible to detect an azimuth of during traveling of a mobile object.

It is to be noted that the effects described above are not necessarily limitative. With or in the place of the above effects, there may be achieved any one of the effects described in this description or other effects that may be grasped from this description.

Brief Description of Drawings

[FIG. 1] FIG. 1 is an explanatory diagram illustrating an example of a north-direction-estimation process according to an embodiment of the present disclosure.

[FIG. 2] FIG. 2 is an explanatory diagram illustrating an example of a bias-removal process according to the embodiment.

[FIG. 3] FIG. 3 is an explanatory diagram illustrating an outline according to the embodiment.

[FIG. 4] FIG. 4 is a block diagram illustrating a functional configuration example of an information processing apparatus according to a first embodiment of the present disclosure.

[FIG. 5] FIG. 5 is an explanatory diagram illustrating an example of a statistical process according to the embodiment.

[FIG. 6] FIG. 6 is an explanatory diagram illustrating an example of a condition for starting a north-seeking process based on an azimuth-variety-evaluation value according to the embodiment.

[FIG. 7] FIG. 7 is an explanatory diagram illustrating an example of a condition for starting a north-seeking process in a case where noise reduction is insufficient according to the embodiment.

[FIG. 8] FIG. 8 is an explanatory diagram illustrating a condition for starting a north-seeking process based on an error-including azimuth-variety-evaluation value according to the embodiment.

[FIG. 9] FIG. 9 is an explanatory diagram illustrating an example of a constraint based on two angular velocities according to the embodiment.

[FIG. 10] FIG. 10 is an explanatory diagram illustrating an example of a constraint based on three angular velocities according to the embodiment.

[FIG. 11] FIG. 11 is an explanatory diagram illustrating an example of a three-dimensional bias-removal process according to the embodiment.

[FIG. 12] FIG. 12 is a flowchart illustrating an operation example of the information processing apparatus according to the embodiment.

[FIG. 13] FIG. 13 is a flowchart illustrating a GNSS-accuracy-evaluation process according to the embodiment.

[FIG. 14] FIG. 14 is a flowchart illustrating a calibration process according to the embodiment.

[FIG. 15] FIG. 15 is a flowchart illustrating a non-traveling process according to the embodiment.

[FIG. 16] FIG. 16 is a block diagram illustrating a functional configuration example of an information processing apparatus according to a second embodiment of the present disclosure.

[FIG. 17] FIG. 17 is a diagram illustrating an example of calculating a rotation component according to the embodiment.

[FIG. 18] FIG. 18 is a diagram illustrating an example of converting coordinates of the rotation component according to the embodiment.

[FIG. 19] FIG. 19 is a diagram illustrating an example of estimating an azimuth according to the embodiment.

[FIG. 20] FIG. 20 is a flowchart illustrating an operation example of the information processing apparatus according to the embodiment.

[FIG. 21] FIG. 21 is a flowchart illustrating a motion-component-removal process according to the embodiment.

[FIG. 22] FIG. 22 is an explanatory diagram illustrating a modification example according to the embodiment.

[FIG. 23] FIG. 23 is an explanatory diagram illustrating the modification example according to the embodiment.

[FIG. 24] FIG. 24 is a block diagram illustrating a functional configuration example of an information processing apparatus according to third and fourth embodiments of the present disclosure.

[FIG. 25] FIG. 25 is an explanatory diagram illustrating an example of controlling an attitude of an inertial measurement unit according to the third embodiment of the present disclosure.

[FIG. 26] FIG. 26 is an explanatory diagram illustrating an example of controlling an attitude of an inertial measurement unit according to the fourth embodiment of the present disclosure.

[FIG. 27] FIG. 27 is an explanatory diagram illustrating an example of controlling the attitude of the inertial measurement unit according to the embodiment.

[FIG. 28] FIG. 28 is an explanatory diagram illustrating an example in which two inertial measurement units are provided according to the embodiment.

[FIG. 29] FIG. 29 is a flowchart illustrating an operation example of the information processing apparatus according to the embodiment.

[FIG. 30] FIG. 30 is a flowchart illustrating an IMU-rotation-control process according to the embodiment.

[FIG. 31] FIG. 31 is a flowchart illustrating a GNSS-accuracy-evaluation process according to the embodiment.

[FIG. 32] FIG. 32 is a block diagram illustrating a functional configuration example of an information processing apparatus according to a fifth embodiment of the present disclosure.

[FIG. 33] FIG. 33 is an explanatory diagram illustrating an example of controlling attitudes of an inertial measurement unit and a camera according to the embodiment.

[FIG. 34] FIG. 34 is a flowchart illustrating a selection process of a main process according to the embodiment.

[FIG. 35] FIG. 35 is an explanatory diagram illustrating a first modification example according to an embodiment of the present disclosure.

[FIG. 36] FIG. 36 is an explanatory diagram illustrating a second modification example according to the embodiment.

[FIG. 37] FIG. 37 is an explanatory diagram illustrating the second modification example according to the embodiment.

[FIG. 38] FIG. 38 is a block diagram illustrating a hardware configuration example of an information processing apparatus according to the embodiment.

Modes for Carrying Out the Invention

The following describes a preferred embodiment of the present disclosure in detail with reference to the accompanying drawings. It is to be noted that, in this description and the accompanying drawings, components that have substantially the same functional configuration are indicated by the same reference signs, and thus redundant description thereof is omitted.

It is to be noted that the description is given in the following order.

1. Embodiments of the Present Disclosure

   1.1. Outline
   1.2. First Embodiment

      1.2.1. Functional Configuration Example
      1.2.2. Operation Example

   1.3. Second Embodiment

      1.3.1. Functional Configuration Example
      1.3.2. Operation Example
      1.3.3. Modification Example

   1.4. Third Embodiment

      1.4.1. Functional Configuration Example

   1.5. Fourth Embodiment

      1.5.1. Functional Configuration Example
      1.5.2. Operation Example

   1.6. Fifth Embodiment

      1.6.1. Functional Configuration Example
      1.6.2. Operation Example

2. Modification Examples
3. Hardware Configuration Example
4. Conclusion

«1. Embodiments of the Present Disclosure»

<1.1. Outline>

In recent years, as a technique for detecting an azimuth of a mobile object when traveling, there has been a technique of performing detection by an electromagnetic compass, a GNSS, or the like. The mobile object may be, for example, a robot (e.g., drone, etc.) that is autonomously movable on the ground, in the air, or the like. However, the present embodiment is not limited to such an example, and the mobile object may be a machine (device) or other general mobile object apparatus that is able to operate autonomously using an electric and/or magnetic action. For example, the mobile object may be other types of robots (e.g., humanoid robots, etc.), vehicles (e.g., cars, vessels, airplanes, etc.), various industrial machines, or toys, etc. In the present embodiment, it is assumed that mobile object is a drone.

An accuracy with which an azimuth is detected by the electromagnetic compass and the GNSS is greatly influenced by surrounding environments. For example, in areas where there are many reinforced structures such as urban areas, the electromagnetic compass is susceptible to magnetic noise generated from reinforcing bars and reduces the accuracy of the azimuth to be detected. In addition, buildings, underground streets, and station platforms in urban areas often become shielding objects that shield GNSS satellite signals or become multi-paths, which are poor as environments for receiving the GNSS satellite signals. For this reason, the accuracy of a position detected by the GNSS is reduced in the buildings, the underground streets, and the station platforms in the urban areas.

Therefore, as a technique for detecting an azimuth without being influenced by the surrounding environment as described above, there is a method using a gyrocompass. The gyrocompass is a device having a function of detecting the north direction on the basis of the earth's rotation component to be detected. Unlike the electromagnetic compass that uses the geomagnetic, the azimuth detected by the gyrocompass does not cause errors due to the influence of the surrounding environment. Further, the accuracy of the azimuth to be detected by the gyrocompass is increased by being corrected on the basis of the information to be detected in each direction when the gyrocompass is stationary in two directions. Moreover, the gyrocompass is also useful in machines where stricter stillness is ensured.

As described above, the gyrocompass is able to detect the azimuth without being influenced by the surrounding environment; therefore, it is expected that a more accurate azimuth is detected in azimuth detection when the drone is traveling. However, it is difficult for the drone to make a strict stillness during traveling (flying). Thus, when the azimuth is detected by the gyrocompass, a minute motion of the drone is detected, and in the azimuth of being detected by the gyrocompass, an error due to the minute motion occurs. Accordingly, the gyrocompass is unable to ensure the accuracy of the azimuth to be detected in the azimuth detection when the drone is traveling. Even if the drone could achieve strict stillness, the drone has to be strictly stationary each time the gyrocompass detects an azimuth, which would constrain a behavior of the drone.

An embodiment of the present disclosure proposes a technique that has been conceived by focusing on the above points, and is able to perform detection of azimuth more accurately during traveling of the mobile object. In particular, in an embodiment of the present disclosure, the north direction is detected with higher accuracy during traveling of the mobile object.

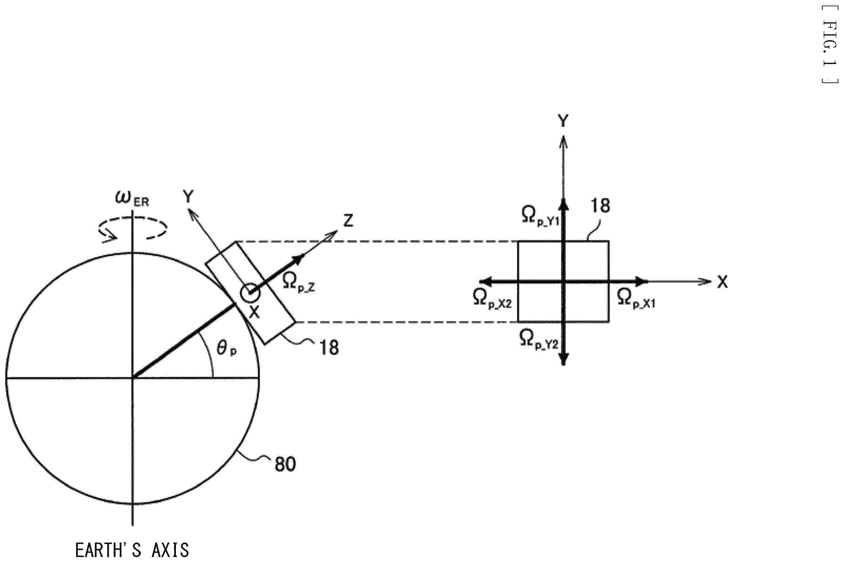

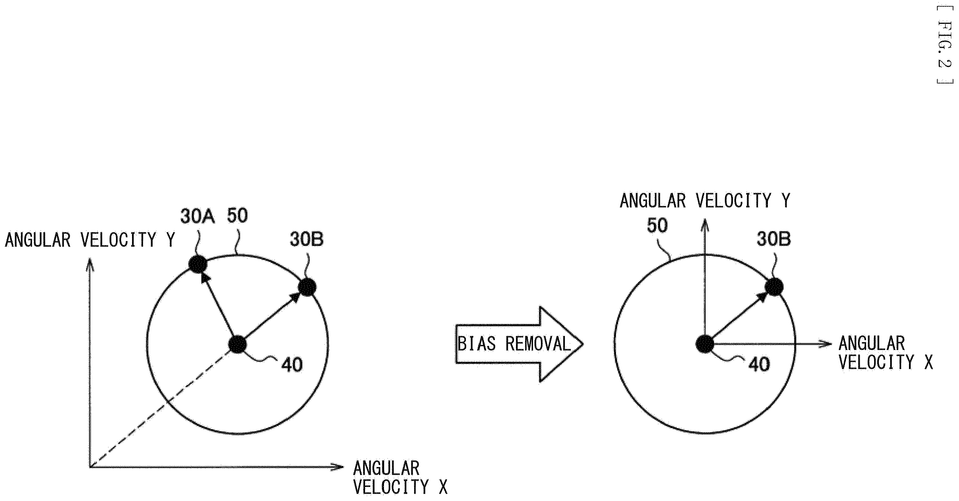

Hereinafter, referring to FIGs. 1 to 3, an outline of an embodiment of the present disclosure will be described. FIG. 1 is an explanatory diagram illustrating an example of a north-direction-estimation process according to an embodiment of the present disclosure. It is to be noted that a figure illustrated on the left side of FIG. 1 is a view of a drone from an x-axis direction of a terminal coordinate system, and a figure illustrated on the right side is a view of the drone from a z-axis direction of the terminal coordinate system. FIG. 2 is an explanatory diagram illustrating an example of a bias-removal process according to an embodiment of the present disclosure. It is to be noted that a figure illustrated on the left side of FIG. 2 is a diagram indicating an angular velocity prior to bias removal, and a figure illustrated on the right side is a diagram indicating an angular velocity after the bias removal.

(North-Direction-Estimation Process)

In a general gyrocompass, the north-direction-estimation process is performed on the basis of an angular velocity to be detected by a gyro sensor. For example, as illustrated on the left side of FIG. 1, it is assumed that a gyrocompass 18 is placed in a state of being stationary at any position on an earth 80. A gyro sensor of the gyrocompass 18 measures an angular velocity caused by the earth's rotation about the axis (the axis of rotation) of the earth 80. It is to be noted that the gyro sensor does not detect angular velocity components in a direction perpendicular to the north direction, that is, in the east-west direction (the X-axis). Further, angular velocity components in a direction not perpendicular to the north direction, i.e. in the south-north direction (the Y-axis) are detected. The gyrocompass 18 uses the vector direction of the largest angular velocity component among the detected angular velocity components as the north direction.

Incidentally, angular velocity components in the X-axis direction are $\Omega_{p\_x1}=0$ and $\Omega_{p\_X2}=0$. Further, angular velocity components in the Y-axis direction are $\Omega_{p\_Y1}=\omega_{ER}\times\cos\theta_p$ and $\Omega_{p\_Y2}=-\omega_{ER}\times\cos\theta_p$. $\omega_{ER}$ represents an earth's rotation speed. Further, $\theta_p$ represents a latitude at a position of the drone. Moreover, an angular velocity in a direction (Z-axis) perpendicular to the X-axis and the Y-axis is $\Omega_{p\_z}=\omega_{ER}\times\sin\theta_p$ (constant). It is to be noted that the drone acquires latitudes from the GNSS.

As described above, the gyrocompass 18 performs north-direction-estimation process on the basis of the angular velocity measured by the gyro sensor. The angular velocity measured by the gyro sensor may include an error component caused by a bias of the gyro sensor. Accordingly, the gyrocompass 18 is able to estimate the north direction with higher accuracy by performing the north-direction-estimation process on the basis of an angular velocity (hereinafter, also referred to as rotation component) from which the bias has been removed. It is to be noted that, in a case where the bias included in the angular velocity to be measured by the gyro sensor is acceptable, the gyrocompass 18 may perform the north-direction-estimation process on the basis of the angular velocity (rotation component) where the bias is not removed.

(Bias-removal process)

In a general method of removing a bias, the bias is estimated on the basis of at least two angular velocities measured when a gyrocompass including a gyro sensor, or a device such as the drone, is stationary, and the bias is removed from the angular velocity. Thus, the rotation component is calculated. In a case where the gyrocompass, or the device such as the drone, is moving, a motion component is generated and an error occurs in the angular velocity. It is thus assumed that, in the method, a gyrocompass, or the device such as the drone, is stationary.

The angular velocity to be measured by the gyro sensor of the gyrocompass is basically a measurement of an angular velocity in three axial directions. The bias estimated on the basis of the measured three-axial angular velocity is estimated as the bias in the three-dimensional space. A rotation component finally calculated by this method lies on the circumference of a circle centered on any position on a plane at a constant elevation angle (latitude). Therefore, if the latitude where gyrocompass is located is known, it is possible to estimate the bias in the two-dimensional plane rather than in the three-dimensional space.

For example, in a figure illustrated on the left side of FIG. 2, an angular velocity 30A and an angular velocity 30B measured at a certain latitude are indicated on the XY-plane. It is to be noted that the angular velocity 30A and the angular velocity 30B are angular velocities that are measured in different directions. An angular velocity at the center of a circle 50 having a circumference on which the two angular velocities are present is a bias 40. It is possible to determine the center of the circle 50 by calculating the radius of the circle 50 on the basis of $\omega_{ER}$, which is the earth's rotation speed, and a latitude $\theta_p$. The radius is $\omega_{ER}\times\cos\theta_p$.

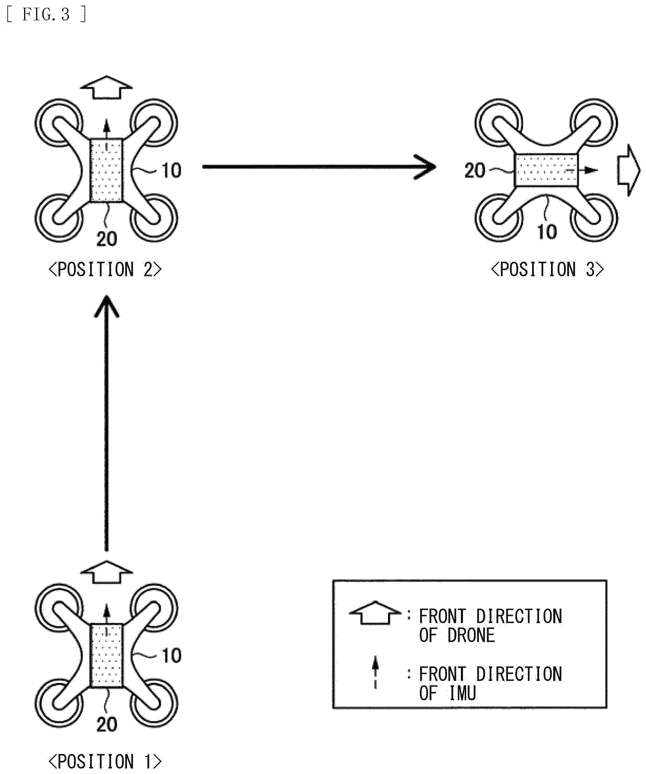

After the bias 40 is calculated, it is possible to calculate the rotation component by removing the angular velocity 30 the bias 40. The figure illustrated on the right side of FIG. 3 indicates, for example, a state in which the bias 40 is removed from the angular velocity 30B.

As described above, in the general method of removing the bias, the bias is estimated on the basis of at least two angular velocities in two directions different from each other measured at standstill, and a latitude, and the bias is removed from the angular velocity.

(Application to Mobile Object)

In the general north-direction-estimation process and bias-removal process described above, it is assumed that the gyrocompass is in a stationary state. For this reason, for example, it is difficult to directly apply the above-described method to a mobile object having a gyrocompass function. This is because the traveling of the mobile object causes the angular velocity to be measured to include, in addition to the rotation component and the bias, an angular velocity (hereinafter also referred to as motion component) caused by the traveling. Accordingly, in an embodiment of the present disclosure, the motion component is removed from the angular velocity to be measured, the bias is removed by the above-described method, and the north-direction-estimation process is performed by the further-above-described method, whereby the azimuth is detected with higher accuracy during traveling of the mobile obj ect.

FIG. 3 is an explanatory diagram illustrating an outline according to an embodiment of the present disclosure. A drone 10 illustrated in FIG. 3 is an example of the mobile object on which an information processing apparatus according to an embodiment of the present disclosure is mounted.

The drone 10 includes, for example, an inertial measurement unit (IMU) 20 (hereinafter also referred to as IMU) as a device that is able to measure inertial data (information). The inertial measurement unit 20 measures inertial data related to the drone 10 when the drone 10 is traveling or stationary. The inertial data includes, for example, an acceleration and an angular velocity. The inertial data is also referred to below as acceleration or angular velocity.

First, as illustrated in FIG. 3, the inertial measurement unit 20 measures a first angular velocity while the drone 10 travels from a position 1 to a position 2. Next, the inertial measurement unit 20 measures a second angular velocity while the drone 10 changes the traveling direction and travels from the position 2 to a position 3. In the example illustrated in FIG. 3, it is assumed that the front direction of the drone 10 while the drone 10 travels is the same as the front direction of the inertial measurement unit 20. As illustrated in FIG. 3, the front direction of the inertial measurement unit 20 while the drone 10 travels from the position 1 to the position 2 is different from the front direction of the inertial measurement unit 20 while the drone 10 travels from the position 2 to the position 3. Therefore, the drone 10 is able to acquire respective angular velocities in two different directions.

The acquired angular velocities each include a motion component, a bias, and a rotation component. Accordingly, the drone 10 calculates the motion component and removes it from each angular velocity. After removing the motion component, the drone 10 calculates the bias on the basis of the two angular velocities from which the motion component has been removed, and removes the bias from the two angular velocities from which the motion component has been removed. Then, the drone 10 performs the north-direction-estimation process on the basis of the angular velocities in which the motion component and the bias are removed and only the rotation component is remained.

It is to be noted that, in the north-direction-estimation process according to the present disclosure embodiment, at least two angular velocities are used. The orientations of the drone 10 when each of the at least two angular velocities is measured differ from each other. Further, at least one of the at least two angular velocities is an angular velocity measured while the drone 10 is traveling. The other angular velocity may be an angular velocity measured while the drone 10 is traveling or an angular velocity measured while the drone 10 is stationary.

Referring to FIGs. 1 to 3, the outline of the embodiment of the present disclosure has been described. Subsequently, a first embodiment of the present disclosure will be described.

<1.2. First Embodiment>

<1.2.1. Functional Configuration Example>

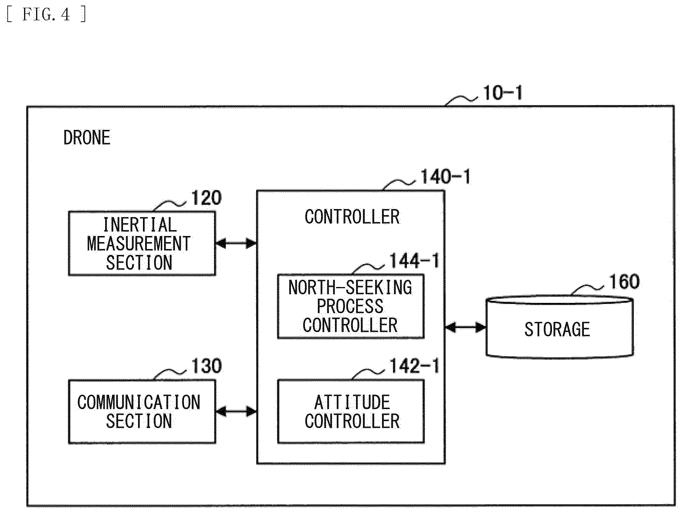

Hereinafter, referring to FIGs 4 to 15, a functional configuration example of an information processing apparatus according to the first embodiment of the present disclosure will be described. FIG. 4 is a block diagram illustrating the functional configuration example of the information processing apparatus according to the first embodiment of the present disclosure.

As illustrated in FIG. 4, a drone 10-1 according to the first embodiment of the present disclosure includes an inertial measurement section 120, a communication section 130, a controller 140-1, and a storage 160.

(1) Inertial Measurement Section 120

The inertial measurement section 120 has a function of measuring inertial data related to the drone 10-1. The inertial measurement section 120 includes an inertial measurement unit (IMU) serving as a device that is able to measure inertial data. The inertial measurement unit is provided with an acceleration sensor and measures, as one piece of inertial data, an acceleration which is an amount of change in the traveling speed of the drone 10-1. Further, the inertial measurement unit is provided with an angular velocity sensor, and measures, as one piece of inertial data, an angular velocity which is an amount of change in an attitude of the drone 10-1. The inertial measurement section 120 outputs the inertial data measured by the inertial measurement unit to the controller 140-1.

(2) Communication Section 130

The communication section 130 has a function of communicating with an external device. For example, in the communication with the external device, the communication section 130 outputs information received from the external device to the controller 140-1. Further, in the communication with the external device, the communication section 130 transmits information inputted from the controller 140-1 to the external device.

(3) Controller 140-1

The controller 140-1 has a function of controlling the entire drone 10-1. For example, the controller 140-1 controls a measurement process in the inertial measurement section 120.

The controller 140-1 also controls a communication process in the communication section 130. Specifically, the controller 140-1 causes the external device to transmit to the communication section 130 information that is outputted in response to a process executed by the controller 140-1.

Further, the controller 140-1 also controls a storing process in the storage 160. Specifically, the controller 140-1 causes the storage 160 to store information that is outputted in response to a process executed by the controller 140-1.

Moreover, the controller 140-1 has a function of controlling a north-seeking process and controlling the attitude of the drone 10. In order to realize such a function, the controller 140-1 includes an attitude controller 142-1 and a north-seeking process controller 144-1.

(3-1) Attitude Controller 142-1

The attitude controller 142-1 has a function of controlling an attitude of the drone 10. For example, when the drone 10 travels, the attitude controller 142-1 changes the attitude of the drone 10 according to the traveling direction.

(3-2) North-Seeking Process Controller 144-1

The north-seeking process controller 144-1 has a function of controlling a process related to the north-seeking. For example, the north-seeking process controller 144-1 has a function of executing a process based on inputted information. For example, the north-seeking process controller 144-1 executes the north-direction-estimation process on the basis of the rotation component obtained by removing the motion component indicating the amount of change in the attitude of the drone 10-1 due to the traveling and the bias of inertial measurement unit from the inertial data inputted from the inertial measurement section 120 during the traveling of the drone 10-1. It is to be noted that at least two rotation components are used for the north-direction-estimation process. The at least two rotation components are calculated on the basis of the inertial data measured while the mobile object is traveling in each of two different directions.

The at least two rotation components may include at least one rotation component calculated on the basis of inertial data measured while the mobile object is traveling. Thus, one of the at least two rotation components may be a rotation component calculated on the basis of inertial data measured while the drone 10-1 is stationary. Since the inertial data measured during the standstill of the drone 10-1 does not contain any motion component, the north-seeking process controller 144-1 has only to remove the bias from the inertial data.

As described above, even if the mobile object is traveling, the north-seeking process controller 144-1 is able to estimate the north direction in a similar state as when the mobile object is stationary by removing the motion component from the angular velocity. Further, the north-seeking process controller 144-1 is able to estimate the north direction with higher accuracy by removing the bias of the inertial measurement unit from the angular velocity.

Hereinafter, processes to be executed by the north-seeking process controller 144-1 until the north direction is estimated will be described in detail.

(GNSS-Accuracy-Evaluation Process)

In a GNSS-accuracy-evaluation process, the north-seeking process controller 144-1 has a function of evaluating the accuracy of positioning performed by the GNSS. For example, the north-seeking process controller 144-1 evaluates the accuracy of the positioning performed by the GNSS on the basis of a dilution of precision (DOP), which indicates a degree of accuracy degradation due to satellite positions in the sky.

If it is determined as a result of the evaluation that the accuracy of the GNSS is low, the north-seeking process controller 144-1 switches the navigation from the navigation by the GNSS to the navigation by the gyrocompass. If it is determined that the accuracy of the GNSS is high, the north-seeking process controller 144-1 continues the navigation by the GNSS.

(Direction-Change-Calculation Process)

In a direction-change-calculation process, the north-seeking process controller 144-1 calculates an amount of change in the direction while the drone 10-1 is traveling or stationary on the basis of the angular velocity measured by the inertial measurement section 120. The north-seeking process controller 144-1 determines whether or not the direction while the drone 10-1 is traveling or stationary has changed based on the amount of change.

(Traveling-Detection Process)

In a traveling-detection-calculation process, the north-seeking process controller 144-1 detects whether the drone 10-1 is traveling or stationary on the basis of the acceleration measured by the inertial measurement section 120.

(Direction-Change-Detection Process and Inertial-Data-Acquisition Process)

In an inertial-data-acquisition process, the north-seeking process controller 144-1 causes the inertial measurement section 120 to measure inertial data related to the drone 10-1. Specifically, the north-seeking process controller 144-1 causes the inertial measurement unit to measure the inertial data when the drone 10-1 is traveling or stationary in a direction within a predetermined range for a predetermined time period.

Here, the predetermined range is, for example, where a range in which the orientation of the drone 10-1 at a point in time when it is determined that drone 10-1 is traveling or stationary represents a reference, an amount of change in orientation from the reference (the direction-change amount), which is indicated by an angle. In a case where the amount of change in the direction while the drone 10-1 is traveling or stationary is within the predetermined range (a first range), the north-seeking process controller 144-1 determines that the drone 10-1 is traveling or stationary in a given direction and causes the inertial measurement section 120 to measure an angular velocity in a first direction. For example, a specific numerical value of the predetermined range (the first range) is set to $\pm 20$ degrees. That is, in the case where the amount of change in the direction while the drone 10-1 is traveling or stationary is within $\pm 20$ degrees, the north-seeking process controller 144-1 determines that the drone 10-1 is traveling or stationary in a given direction. It is to be noted that the specific numerical value of the predetermined range (the first range) is not limited to $\pm 20$ degrees, and any numerical value may be set.

After measuring the angular velocity in the first direction, the north-seeking process controller 144-1 determines whether there has been a change in the direction in which the drone 10-1 is traveling or stationary on the basis of the amount of change in the direction of the drone 10-1. In a case where the amount of change in the direction while the drone 10-1 is traveling or stationary is more than or equal to a predetermined range (a second range), the north-seeking process controller 144-1 determines that the direction in which the drone 10-1 is traveling or stationary has changed and causes the inertial measurement section 120 to measure an angular velocity in a second direction. For example, a specific numerical value of the predetermined range (the second range) is set to $\pm 45$ degrees. That is, in the case where the amount of change in the direction while the drone 10-1 is traveling or stationary is $\pm 45$ degrees or more, the north-seeking process controller 144-1 determines that the direction in which the drone 10-1 is traveling or stationary has changed. It is to be noted that the specific numerical value of the predetermined range (the second range) is not limited to $\pm 45$ degrees, and any numerical value may be set.

In a case where the inertial measurement section 120 has been able to measure the angular velocity for a predetermined time period in one direction, the north-seeking process controller 144-1 adds 1 to a calibration level indicating that measurement of the angular velocity in one direction has been completed.

It is to be noted that, in a case where it is determined that the direction in which the drone 10-1 is traveling or stationary has changed before the predetermined time period elapses, the north-seeking process controller 144-1 ends the measurement of the angular velocity in the direction before the change, and starts the measurement of the angular velocity in the direction after the change.

It is to be noted that the two angular velocities measured before and after the change in directions in which the drone 10-1 is traveling or stationary may be such that if one angular velocity is an angular velocity measured when the drone 10-1 is traveling, the other angular velocity may be an angular velocity measured when the drone 10-1 is stationary.

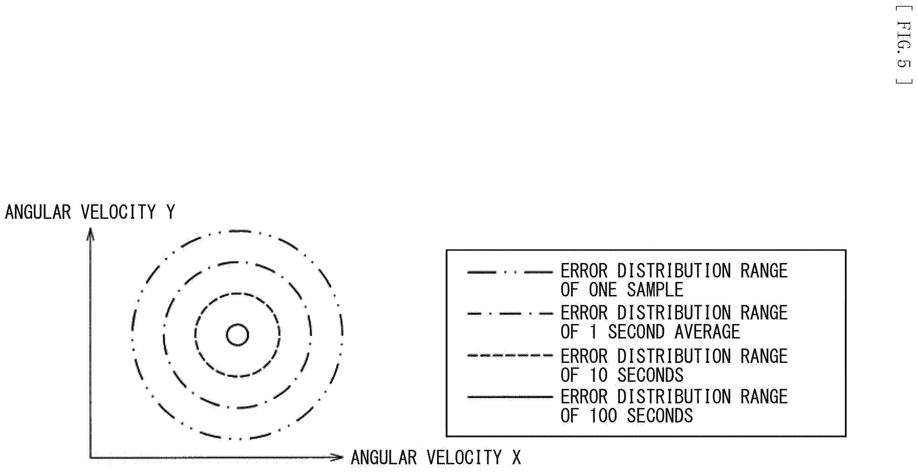

It is to be noted that the inertial measurement section 120 repeats the measurement process for a predetermined time period, and hence measures a plurality of angular velocities. The north-seeking process controller 144-1 calculates an averaged angular velocity by performing a statistical process on the plurality of angular velocities. Hereinafter, referring to FIG. 5, the statistical process for the angular velocities will be described. FIG. 5 is an explanatory diagram illustrating an example of the statistical process according to the first embodiment of the present disclosure. It is to be noted that each circle illustrated in FIG. 5 indicates an error distribution range in which the angular velocity including an error is distributed, and the center of each circle is assumed to be a true value.

The angular velocity to be measured by the inertial measurement section 120 varies around the true value due to noise included therein. Accordingly, the inertial measurement section 120 measures a plurality of angular velocities (hereinafter also referred to as samples) by repeating the measurement process during the predetermined time period, and the north-seeking process controller 144-1 averages the plurality of angular velocity, thus, noise included in the angular velocity is reduced. It is to be noted that with an increase in the predetermined time period, the number of samples to be measured increases, and hence it is possible to further reduce the noise. Further, in a case where the drone 10-1 is traveling, a traveling time period of the drone 10-1 is set to the predetermined time period. Further, in a case where the drone 10-1 is stationary, a stationary time period of the drone 10-1 is set to the predetermined time period.

For example, in a case where the inertial measurement section 120 measures only one sample, the sample is distributed at any position within a circle of a two-dot chain line illustrated in FIG. 5. In a case where the inertial measurement section 120 measures one second worth samples and the north-seeking process controller 144-1 performs the averaging, the noise is reduced as compared to the case of only one sample, and a range in which the samples are distributed is reduced to a size of a circle of a one-dot chain line. Further, in a case where the inertial measurement section 120 measures 10 seconds worth samples and the north-seeking process controller 144-1 performs the averaging, the noise is further reduced as compared to the case of measuring the one second worth samples, and a range in which the samples are distributed is reduced to a size of a circle indicated by a broken line. Further, in a case where the inertial measurement section 120 measures 100 seconds worth samples and the north-seeking process controller 144-1 performs the averaging, the noise is further reduced as compared to the case of measuring 10 seconds worth samples, and the range in which the samples are distributed is reduced to a size of a solid line circle. It is to be noted that, in the first embodiment of the present disclosure, the error distribution range that is worth 100 seconds illustrated by the solid line in FIG. 5 is an acceptable error range, and the angular velocity calculated by averaging the 100 seconds worth samples is used in the north-seeking process to be described later.

(Calibration Process)

In a calibration process, the north-seeking process controller 144-1 performs the above-described inertial-data-acquisition process and performs a process of removing a motion component from the acquired angular velocity (a motion-component-removal process). The north-seeking process controller 144-1 may calculate the motion component in any manner.

For example, the north-seeking process controller 144-1 acquires a first attitude of the drone 10-1 calculated on the basis of the angular velocity of the drone 10-1 to be measured by the inertial measurement unit, and acquires, as the motion component, an angular velocity to be calculated on the basis of a second attitude of the drone 10-1 to be obtained by correcting the first attitude using a traveling speed of the drone 10-1 as a reference.

Specifically, the north-seeking process controller 144-1 calculates the first attitude of the drone 10-1 by performing an INS (Inertial Navigation System) calculation on the angular velocity to be measured by the inertial measurement unit. It is to be noted that a value indicating the attitude is an angle. Further, the traveling speed of the drone 10-1 is calculated on the basis of a walking feature quantity of a user carrying the drone 10-1. For example, the north-seeking process controller 144-1 calculates the traveling speed of the user, i.e., the traveling speed of the drone 10-1, on the basis of a length of step and a walking pitch of the user carrying the drone 10-1.

In the above-described INS calculation, the traveling speed of the drone 10-1 is also calculated on the basis of an acceleration to be measured by the inertial measurement unit. The north-seeking process controller 144-1 corrects the first attitude on the basis of a result of comparing the traveling speed of the drone 10-1 calculated on the basis of the walking feature quantity with the traveling speed of the drone 10-1 calculated by the INS calculation, and calculates the corrected second attitude as a more accurate attitude. The north-seeking process controller 144-1 defines an angular velocity obtained by differentiating the second attitude as the motion component.

Further, the north-seeking process controller 144-1 may acquire a third attitude of the drone 10-1 calculated on the basis of the angular velocity of the drone 10-1 to be measured by the inertial measurement unit, and a fourth attitude of the drone 10-1 calculated on the basis of the acceleration of the drone 10-1, and may acquire an angular velocity calculated on the basis of a difference between the third attitude and the fourth attitude as the motion component. Specifically, the north-seeking process controller 144-1 calculates the third attitude of the drone 10-1 by integrating the angular velocity to be measured by the inertial measurement unit. Further, the north-seeking process controller 144-1 calculates the fourth attitude of the drone 10-1, for example, on the basis of an average value of accelerations (e.g., gravitational accelerations) measured while the drone 10-1 is stationary. The north-seeking process controller 144-1 defines an angular velocity obtained by differentiating the difference between the third attitude and the fourth attitude as the motion component.

(North-Seeking Process)

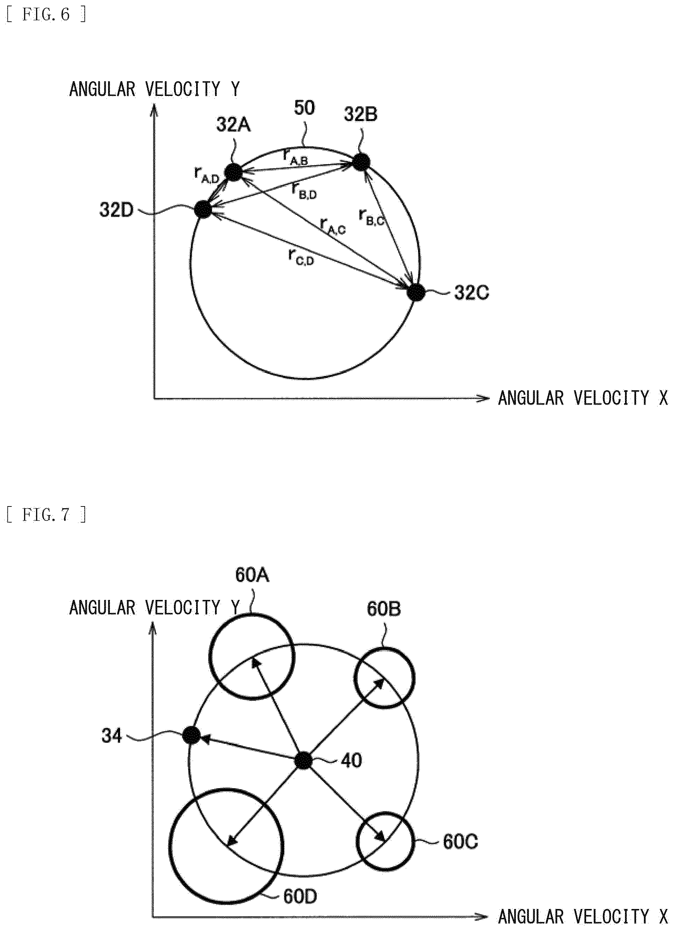

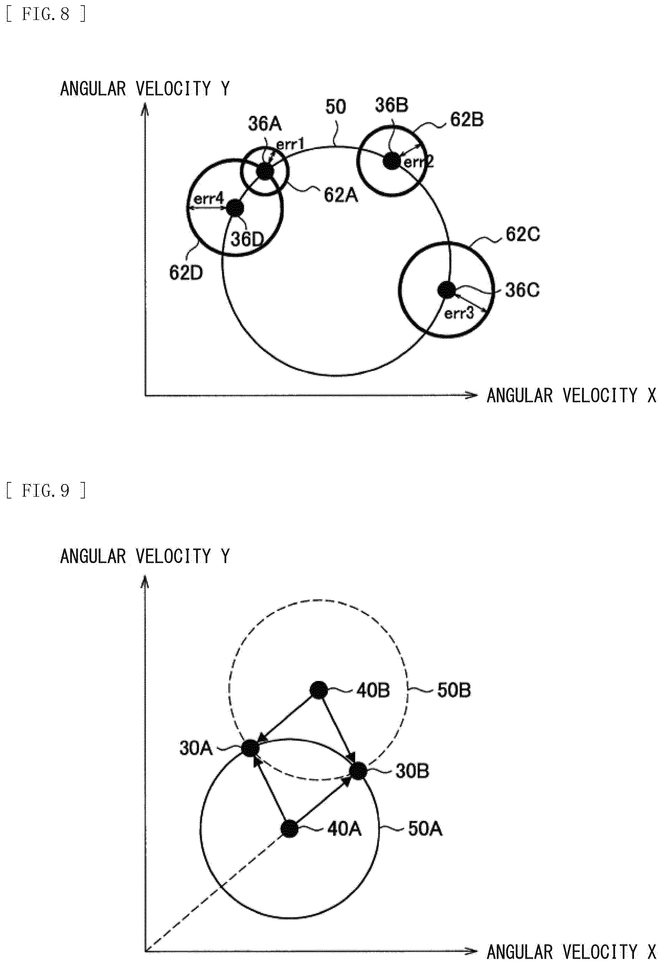

Hereinafter, referring to FIGs. 6 to 11, the north-seeking process according to the first embodiment of the present disclosure will be described. FIG. 6 is an explanatory diagram illustrating an example of a condition for starting the north-seeking process based on an azimuth-variety-evaluation value according to the first embodiment of the present disclosure. FIG. 7 is an explanatory diagram illustrating an example of a condition for starting the north-seeking process in a case where noise reduction is insufficient according to the first embodiment of the present disclosure. FIG. 8 is an explanatory diagram illustrating a condition for starting a north-seeking process based on an error-including azimuth-variety-evaluation value according to the first embodiment of the present disclosure.

In the north-seeking process according to the first embodiment of the present disclosure, the north-seeking process controller 144-1 performs the bias-removal process of removing a bias from the angular velocity from which the motion component has been removed, and the north-direction-estimation process of estimating the north direction on the basis of the angular velocity from which the bias has been removed.

First, prior to performing the north-seeking process, the north-seeking process controller 144-1 checks whether or not a predetermined condition is satisfied. If the predetermined condition is satisfied, the north-seeking process controller 144-1 starts the north-seeking process. The predetermined condition is, for example, that information necessary for the north-seeking process is acquired. Specifically, the north-seeking process controller 144-1 determines whether the angular velocity during traveling or standstill of the drone 10-1 is measured for a predetermined time period in each of two orientations that are different from each other by a predetermined amount or more. The two orientations that are different from each other by a predetermined angle or more are the first direction and the second direction to be detected by the above-described direction-change-detection process. That is, in a case where the respective angular velocities in the first direction and the second direction have been acquired, the north-seeking process controller 144-1 starts the north-seeking process.

It is to be noted that the condition under which the north-seeking process controller 144-1 starts the north seeking is not limited to the above-described example. For example, the predetermined condition may be that a sum of differences of the respective angular velocities is greater than or equal to a predetermined threshold. Specifically, first, the north-seeking process controller 144-1 calculates the differences among an angular velocity 32A, an angular velocity 32B, an angular velocity 32C, and an angular velocity 32D, which are illustrated in FIG. 6. For n-number of angular velocities 32 on the circle 50, $_nC_2$-number of differences are calculated. In an example of the case illustrated in FIG. 6, the number of angular velocities 32 on the circle 50 is four, so that the number of differences is $_4C_2=6$. Therefore, as illustrated in FIG. 6, the north-seeking process controller 144-1 calculates six differences, a difference $r_{A,B}$, a difference $r_{B,C}$, a difference $r_{C,D}$, a difference $r_{D,A}$, a difference $r_{A,C}$, and a difference $r_{B,D}$. Thereafter, the north-seeking process controller 144-1 calculates a sum $Eva_1$ of the differences by the following Equation (1), and sets the calculated $Eva_1$ as an evaluated value.

[Math. 1]

$$\mathrm{E\,v\,a}_1 = \Sigma\, \mathrm{r}_{i,j} \quad (i < j) \quad \cdots (1)$$

The calculated evaluation value indicates that the larger the value, the more widely the angular velocity is distributed on the circle 50. The north-seeking process controller 144-1 is able to further improve the accuracy of estimating the center of the circle 50 by using angular velocities that are more widely distributed on the circle 50. Accordingly, the north-seeking process controller 144-1 checks whether or not the calculated evaluation value is greater than or equal to a predetermined threshold. If the calculated evaluation value is greater than or equal to the predetermined threshold value, the north-seeking process controller 144-1 may determine that it is ensured that the accuracy of estimating the center of the circle 50 is greater than or equal to a given value, and may initiate the north-seeking process.

Further, the predetermined condition may be that, if there are many angular velocities whose noise reduction is insufficient among the plurality of angular velocities from which motion components have been removed, the noise reduction in the angular velocity from which the motion component has been removed last is sufficient. If the noise reduction of the angular velocity from which the motion component has been removed last is sufficient, the noise reduction of other angular velocities from which the motion components have been removed may not necessarily be sufficient. In a case of an example illustrated in FIG. 7, the angular velocity from which the motion component has been removed last is an angular velocity 34 and the other angular velocities from which the motion components have been removed are an angular velocity 60A, an angular velocity 60B, an angular velocity 60C, and an angular velocity 60D.

Even if only four angular velocities of the angular velocity 60A, the angular velocity 60B, the angular velocity 60C, and the angular velocity 60D are on the circle 50, the north-seeking process controller 144-1 is able to estimate the bias 40 at the center of the circle 50. However, since the four angular velocities have poor noise reduction, the estimated bias 40 may contain an error. Accordingly, the north-seeking process controller 144-1 estimates the bias 40 using the angular velocity 34 whose noise has been sufficiently reduced, thereby estimating the bias 40 with higher accuracy than the bias 40 estimated without using the angular velocity 34. Therefore, in the case where there are many angular velocities whose noise reduction is insufficient among the plurality of angular velocities from which motion components have been removed, the north-seeking process controller 144-1 checks whether or not the noise reduction of the angular velocity from which the motion component has been removed last is sufficient. Finally, if the noise-reduction of the angular velocity from which the motion component has been removed last is sufficient, the north-seeking process controller 144-1 may initiate the north-seeking process.

Further, the predetermined condition may be that a sum of values obtained by incorporating errors included in the respective angular velocities into the respective differences of the angular velocities is larger than or equal to a predetermined threshold. In a case of the example illustrated in FIG. 8, it is assumed that respective error ranges of an angular velocity 36A, an angular velocity 36B, an angular velocity 36C, and an angular velocity 36D are an error range 62A, an error range 62B, an error range 62C, and an error range 62D, respectively. Further, it is assumed that respective magnitudes of the errors are err1, err2, err3, and err4. It is to be noted that the magnitudes of the errors become larger as the noise reduction time period is shorter, and become smaller as the noise reduction time period is longer.

The north-seeking process controller 144-1 calculates an estimation value $Eva_2$ in which the errors of the angular velocities are incorporated into the sum $Eva_1$ of the differences, according to the following Equation (2).

[Math. 2]

$$E v a_2 = \Sigma \left( r_{i,j} / \left( e r r_i \times e r r_j \right) \right) \qquad (i < j) \quad \cdots (2)$$

The calculated evaluation value indicates that the larger the evaluation value is, the higher the accuracy of estimating the center of circle 50 is. Therefore, the north-seeking process controller 144-1 checks whether or not the calculated evaluation value is greater than or equal to the predetermined threshold. If the calculated evaluation value is greater than or equal to the predetermined threshold, the north-seeking process controller 144-1 may determine that it is ensured that the accuracy of estimating the center of the circle 50 is greater than or equal to the predetermined threshold, and may initiate the north-seeking process.

- Bias-removal process

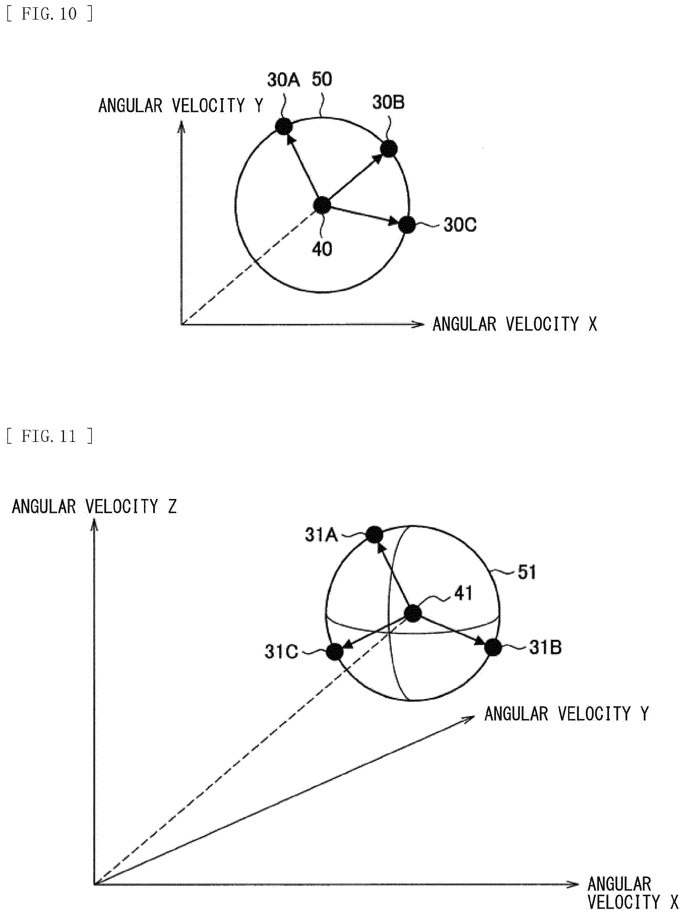

Hereinafter, referring to FIGs. 9 to 11, the bias-removal process according to the first embodiment of the present disclosure will be described. FIG. 9 is an explanatory diagram illustrating an example of a constraint based on two angular velocities according to the first embodiment of the present disclosure. FIG. 10 is an explanatory diagram illustrating an example of a constraint based on three angular velocities according to the first embodiment of the present disclosure. FIG. 11 is an explanatory diagram illustrating an example of a three-dimensional bias-removal process according to the first embodiment of the present disclosure.

The north-seeking process controller 144-1 acquires a bias on the basis of: at least two angular velocities from which motion components have been removed and in which the orientations of the drone 10-1 at the respective measurement timings are different from each other; and a latitude at the position of the drone 10-1. The north-seeking process controller 144-1 is able to estimate the bias in a manner similar to when a mobile object is stationary, by using the angular velocities obtained by removing motion components from the angular velocities measured while the mobile object is traveling. It is to be noted that the method of estimating the bias by the north-seeking process controller 144-1 is similar to the method described in <1.1. Outline>.

It is to be noted that, in a case where the bias is estimated on the basis of two angular velocities, two bias candidates may be estimated by the north-seeking process controller 144-1. Accordingly, a constraint is necessary for the north-seeking process controller 144-1 to select one bias from the candidates. For example, as illustrated in FIG. 9, if it is assumed that two angular velocities, an angular velocity 30A and an angular velocity 30B, are located on the circumference of a circle 50A, a value at the center of the circle 50A is estimated as a bias 40A. Further, assuming that the two angular velocities, the angular velocity 30A and the angular velocity 30B, are located on the circumference of a circle 50B, a value at the center of the circle 50B is estimated as a bias 40B.

As described above, in a case where two biases are estimated, the north-seeking process controller 144-1 selects an appropriate bias, for example, according to a constraint of "selecting a bias whose absolute azimuth change between the two estimated biases is closer to angular velocity integration".

It is to be noted that, in a case where the bias is estimated on the basis of three angular velocities, only one bias is estimated by the north-seeking process controller 144-1, and thus the above-described constraint is not necessary. For example, as illustrated in FIG. 10, in a case where three angular velocities, an angular velocity 30A, an angular velocity 30B, and an angular velocity 30C, are used, a circle on which the three angular velocities are located on the same circumference is only a circle 50. Thus, a value at the center of the circle 50 is uniquely estimated as the bias 40. Further, in the case where the three angular velocities are used, the north-seeking process controller 144-1 is able to estimate the radius of the circle 50 without using the latitude.

It is to be noted that, in the above bias-removal process, the examples in which the north-seeking process controller 144-1 estimates the bias on the basis of angular velocity components in two-axis directions have been described. As a specific use case in which the bias is estimated on the basis of the angular velocity components in the two-axis directions, an example of using a head-mounted terminal is given. For the head-mounted terminal, only attitude changes occur due to rotation in a substantially horizon plane, i.e., rotation with the yaw axis as the axis of rotation. Accordingly, the north-seeking process controller 144-1 may estimate the bias only on the basis of the angular velocity components in two-axis directions by using the latitude in combination.

In contrast, for a terminal whose attitude may change three-dimensionally, such as a terminal of a smartphone or the like, it is necessary that the bias be estimated on the basis of angular velocity components in three-axis directions. For example, in a case where a change in attitude caused by not only rotation with the yaw axis of the terminal as the rotation axis but also rotation with the pitch axis or the roll axis as the rotation axis occurs in the terminal, the north-seeking process controller 144-1 estimates the bias on the basis of all angular velocity components in the three-axis directions. Specifically, on the assumption that three points, i.e., an angular velocity 31A, an angular velocity 31B, and an angular velocity 31C, illustrated in FIG. 11 are located on the spherical surface of a sphere 51, the center of the sphere 51 is estimated on the basis of the three points, and a value of the angular velocity at the center is estimated as

a bias 41.

- North-Direction-Estimation Process

In the north-direction-estimation process, the north-seeking process controller 144-1 estimates the north direction on the basis of the angular velocity that does not contain the motion component and the bias. It is to be noted that the north-seeking process controller 144-1 estimates the north direction by the method described in <1.1. Outline>.

(5) Storage 160

The storage 160 has a function to store data acquired by a process performed in the information processing apparatus. For example, the storage 160 stores inertial data measured by the inertial measurement section 120. Specifically, the storage 160 stores the acceleration and the angular velocity of the drone 10-1 measured by the inertial measurement section 120.

It is to be noted that the data stored by the storage 160 is not limited to the above-mentioned inertial data. For example, the storage 160 may also store data to be outputted in the processes of the north-seeking process controller 144-1, a program such as various applications, data, and the like.

With reference to FIGs. 4 to 11, the functional configuration example of the information processing apparatus according to the first embodiment of the present disclosure has been described. Subsequently, an operation example of the information processing apparatus according to the first embodiment of the present disclosure will be described.

<1.2.2. Operation Example>

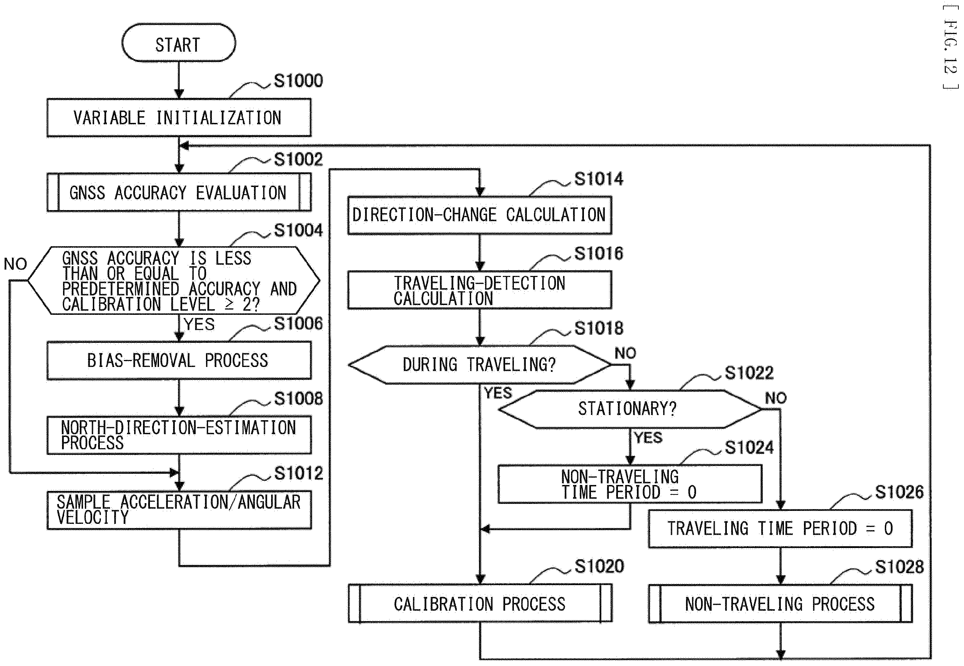

Hereinafter, referring to FIGs. 12 to 15, an operation example of the information processing apparatus according to the first embodiment of the present disclosure will be described. FIG. 12 is a flowchart illustrating the operation example of the information processing apparatus according to the first embodiment of the present disclosure.

(Main Process)

As illustrated in FIG. 12, first, the controller 140-1 performs a variable initialization process (step S1000). After the initialization process, the controller 140-1 performs a GNSS accuracy evaluation (step S1002). A detailed process flow of the GNSS accuracy evaluation will be described later. After the GNSS process, the controller 140-1 checks a GNSS accuracy and a calibration level (step S1004). If the GNSS accuracy is less than or equal to a predetermined accuracy and the calibration level is greater than or equal to 2 (step S1004/YES), the controller 140-1 performs the bias-removal process (step S1006). After the bias-removal process, on the basis of a rotation component acquired by the bias-removal process, the controller 140-1 performs the north-direction-estimation process (step S 1008).

If the GNSS accuracy is less than or equal to the predetermined accuracy and the calibration level is not greater than or equal to 2 (step S1004/NO), or after the north-direction-estimation process of step S1008, the controller 140-1 samples an acceleration and an angular velocity (step S1012). On the basis of the sampled acceleration and angular velocity, the controller 140-1 performs a direction-change calculation (step S1014) and a traveling-detection calculation (step S1016).

On the basis of a result of the traveling-detection calculation, the controller 140-1 determines whether or not the drone 10-1 is traveling (step S1018). If the drone 10-1 is traveling (step S1018/YES), the controller 140-1 performs the calibration process (step S1020). A detailed process flow of the calibration process will be described below.

If the drone 10-1 is not traveling (step S1018/NO), the controller 140-1 determines whether or not the drone 10-1 is stationary (step S1022). If the drone 10-1 is stationary (step S1022/YES), the controller 140-1 sets a non-traveling time period that is the variable to 0 (step S1024) and performs the calibration process (step S1020).

If the drone 10-1 is not stationary (step S1022/NO), the controller 140-1 sets the traveling time period that is the variable to 0 (step S1026) and performs a non-traveling process (step S1028). A detailed process flow of the non-traveling process will be described below.

After the calibration process or the non-traveling process, the controller 140-1 repeats the above process from the GNSS accuracy evaluation of step S1002.

(GNSS-Accuracy-Evaluation Process)

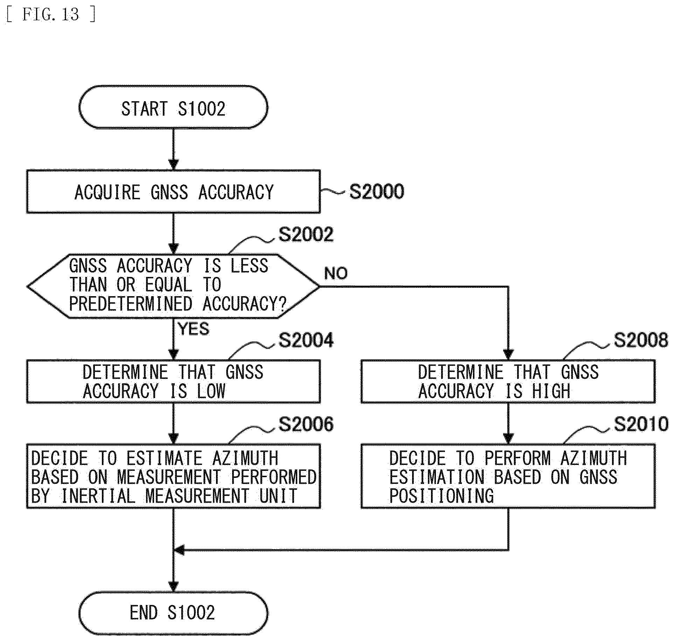

Hereinafter, referring to FIG. 13, the GNSS-accuracy-evaluation process in the a sub flowchart will be described. FIG. 13 is a flowchart illustrating the GNSS-accuracy-evaluation process according to the first embodiment of the present disclosure.

As illustrated in FIG. 13, first, the controller 140-1 acquires the GNSS accuracy (step 2000). The controller 140-1 determines whether or not the GNSS accuracy is less than or equal to a predetermined accuracy (step S2002). If the GNSS accuracy is less than or equal to the predetermined accuracy (step S2002/YES), the controller 140-1 determines that the GNSS accuracy is low (step S2004). The controller 140-1 then decides to estimate an azimuth based on the measurement performed by the inertial measurement unit 20 (step S2006), and ends the GNSS-accuracy-evaluation process in step S1002.

It is to be noted that in a case where the GNSS accuracy is not less than or equal to the predetermined accuracy (step S2002/NO), the controller 140-1 determines that the GNSS accuracy is high (step S2008). The controller 140-1 then decides to perform azimuth estimation based on the GNSS positioning (step S2010), and ends the GNSS-accuracy-evaluation process in step S1002.

(Calibration Process)

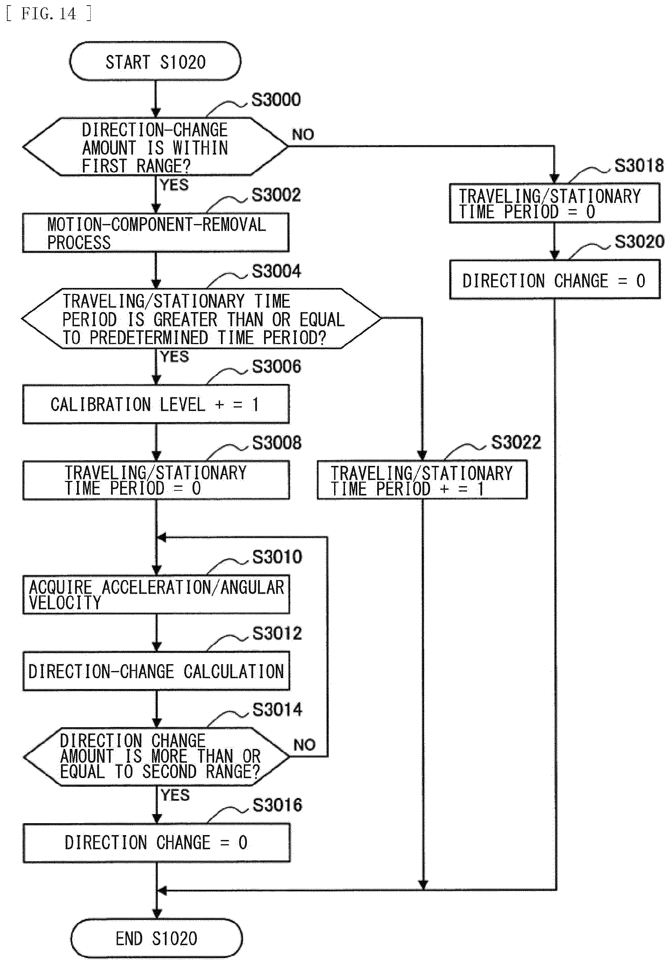

Hereinafter, referring to FIG. 14, the calibration process in a sub flowchart will be described. FIG. 14 is a flowchart illustrating the calibration process according to the first embodiment of the present disclosure.

As illustrated in FIG. 14, first, the controller 140-1 checks whether or not the direction-change amount of the drone 10-1 is within the first range (step S3000). If the direction-change amount is less than or equal to the first range (step S3000/YES), the controller 140-1 performs the motion-component-removal process (step S3002). After the motion-component-removal process, the controller 140-1 checks whether or not the traveling time period or the stationary time period is greater than or equal to a predetermined time period (step S3004). If the traveling time period or the stationary time period is greater than or equal to the predetermined time period (step S3004/YES), the controller 140-1 adds 1 to the calibration level (step S3006). Since calibration in one direction is completed, the controller 140-1 resets the traveling time period/or the stationary time period to 0 (step S3008).

After resetting, the controller 140-1 acquires an acceleration and an angular velocity (step S3010) and performs the direction-change calculation (step S3012). As a result of the direction-change calculation, in a case where the direction-change amount is not more than or equal to the second range (step S3014/NO), the controller 140-1 repeats step S3010 to step S3014 process. As a result of the direction-change calculation, in a case where the direction-change amount is more than or equal to the second range (step S3014/YES), the controller 140-1 determines that the orientation of the drone 10-1 has changed. The controller 140-1 then resets the direction change to 0 (step S3016) and ends the calibration process in step S1020.

It is to be noted that, in a case where the direction-change amount is not within the first range (step S3000/NO), the controller 140-1 sets the traveling time period or the stationary time period to 0 (step S3018), sets the direction change to 0 (step S3020), and ends the calibration process in step S1020.

Also, if the traveling time period or the stationary time period is not greater than or equal to the predetermined time period (step S3004/NO), the controller 140-1 adds 1 to the traveling time period or the stationary time period (step S3022) and ends the calibration process in step S1020.

(Non-Traveling Process)

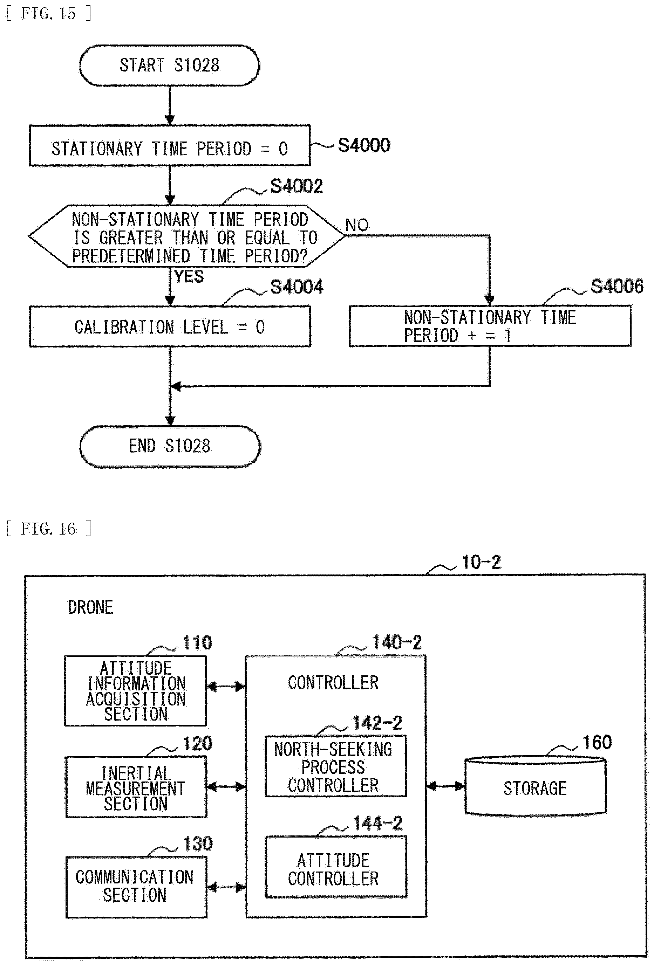

Hereinafter, referring to FIG. 15, the non-traveling process in a sub flowchart will be described. FIG. 15 is a flowchart illustrating the non-traveling process according to the first embodiment of the present disclosure.

As illustrated in FIG. 15, the controller 140-1 first sets the stationary time period that is the variable to 0 (step S4000). The controller 140-1 checks whether or not the non-stationary time period is greater than or equal to a predetermined time period (step S4002). If the non-stationary time period is greater than or equal to the predetermined time period (step S4002/YES), the controller 140-1 sets the calibration level to 0 (step S4004) and ends the non-traveling process in step S1028.

If the non-stationary time period is not greater than or equal to the predetermined time period (step S4002/NO), the controller 140-1 adds 1 to the non-stationary time period (step S4006) and ends the non-traveling process in step S1028.

The operation example of the information processing apparatus according to the first embodiment of the present disclosure has been described above referring to FIGs. 12 to 15.

Heretofore, the first embodiment of the present disclosure has been described by referring to FIGs. 4 to 15. Subsequently, a second embodiment of the present disclosure will be described.

<1.3. Second Embodiment>

In the above first embodiment, an example in which the motion component is acquired on the basis of the inertial data measured by the inertial measurement section 120 has been described, but the method of acquiring the motion component is not limited to such an example. As an example, in the second embodiment, an example will be described in which the motion component is acquired on the basis of attitude information which is information related to an attitude of a drone 10-2. It is to be noted that in the following, descriptions of points overlapping with the first embodiment will be omitted as appropriate.

<1.3.1. Functional Configuration Example>

Referring to FIGs. 16 to 23, a functional configuration example of an information processing apparatus according to the second embodiment of the present disclosure will be described. FIG. 16 is a block diagram illustrating a functional configuration example of the information processing apparatus according to the second embodiment of the present disclosure.

As illustrated in FIG. 16, the drone 10-2 according to the second embodiment of the present disclosure includes an attitude information acquisition section 110, the inertial measurement section 120, the communication section 130, a controller 140-2, and the storage 160.

(1) Attitude Information Acquisition Section 110

The attitude information acquisition section 110 has a function of acquiring attitude information of the drone 10-2. The attitude information acquisition section 110 is equipped with an attitude information acquisition device that is able to obtain the attitude information. As an example, the attitude information acquisition device may be implemented by an imaging device. The attitude information acquisition section 110 acquires, as the attitude information, a captured image obtained by imaging the environment outside the drone 10-2 by the imaging device. It is to be noted that the device that implements the attitude information acquisition device is not limited to the imaging device. For example, the attitude information acquisition device may be implemented by a distance measurement device such as LIDAR (Laser Imaging Detection and Ranging). In a case where the attitude information acquisition device is the LIDAR, the attitude information acquisition section 110 acquires, as the attitude information, a time period until the LIDAR receives reflected light of a laser beam emitted from the LIDAR to a target, for example. The attitude information acquisition section 110 outputs the attitude information acquired by the attitude information acquisition device to the controller 140-2.

The attitude information acquired by the attitude information acquisition device is influenced by the surrounding environments and motion conditions of the mobile object, but is not influenced by the rotation of the earth. Therefore, the attitude information acquisition device is able to acquire attitude information that does not include a rotation component.

(2) Inertial Measurement Section 120

The functions of the inertial measurement section 120 are the same as those described in <1.2.1. Functional Configuration Example>, and hence, the description in this chapter will be omitted. It is to be noted that in the second embodiment, the acceleration sensor included in the inertial measurement section 120 may function as an attitude information acquisition device. In a case where the acceleration sensor functions as the attitude information acquisition device, the gravity calculated on the basis of acceleration to be measured by the acceleration sensor may be used as the attitude information acquired by the attitude information acquisition device of the attitude information acquisition section 110.

(3) Communication Section 130

The functions of the communication section 130 are the same as those described in <1.2.1. functional configuration example>, and hence, the description in this chapter will be omitted.

(4) Controller 140-2

Some of the functions of the controller 140-2 are different from the functions of the controller 140 described in the above embodiment.

(4-1) Attitude Controller 142-2

The functions of the attitude controller 142-2 are the same as those of the attitude controller 142-1 described in <1.2.1. functional configuration example>, and hence, the description in this chapter will be omitted.

(4-2) North-Seeking Process Controller 144-2

The north-seeking process controller 144-1 according to the first embodiment described above obtains the rotation component on the basis of the inertial data. In contrast, the north-seeking process controller 144-2 according to the second embodiment acquires a rotation component on the basis of the inertial data and the attitude information.

For example, the north-seeking process controller 144-2 acquires a first traveling information regarding traveling of the mobile object calculated on the basis of the inertial data measured by the inertial measurement unit and a second traveling information regarding traveling of the mobile object acquired on the basis of the attitude information acquired by the attitude information acquisition device. The north-seeking process controller 144-2 then acquires a rotation component on the basis of the acquired first traveling information and the acquired second traveling information. Hereinafter, it is assumed that the first traveling information is an attitude of the mobile object calculated on the basis of an angular velocity of the mobile object (hereinafter, also referred to as "fifth attitude"), and the second traveling information is an attitude of the mobile object acquired on the basis of the attitude information (hereinafter, also referred to as "sixth attitude"). It is to be noted that the traveling information is not limited thereto. Further, for example, the north-seeking process controller 144-2 calculates a difference between the fifth attitude and the sixth attitude, and acquires the difference as the rotation component. It is to be noted that the method of acquiring the rotation component is not limited thereto.

Specifically, the north-seeking process controller 144-2 calculates the fifth attitude of the drone 10-2 by integrating the angular velocity to be measured by the inertial measurement unit. Further, the north-seeking process controller 144-2 executes a process of VSLAM (Visual Simultaneous Localization and Mapping) on the captured image acquired by the imaging device of the attitude information acquisition device, and calculates the sixth attitude of the drone 10-2. It is to be noted that, when calculating the sixth attitude, the north-seeking process controller 144-2 calculates the gravity on the basis of an acceleration to be measured by the inertial measurement unit, and calculates, on the basis of the gravity, the sixth attitude taken into account a ground direction.

If the attitude information acquisition device is the LIDAR, the north-seeking process controller 144-2 may calculate the sixth attitude of the drone 10-2 on the basis of the time acquired by the LIDAR

The north-seeking process controller 144-2 then calculates a difference between the fifth attitude and the sixth attitude, and acquires the calculated difference as the rotation component.

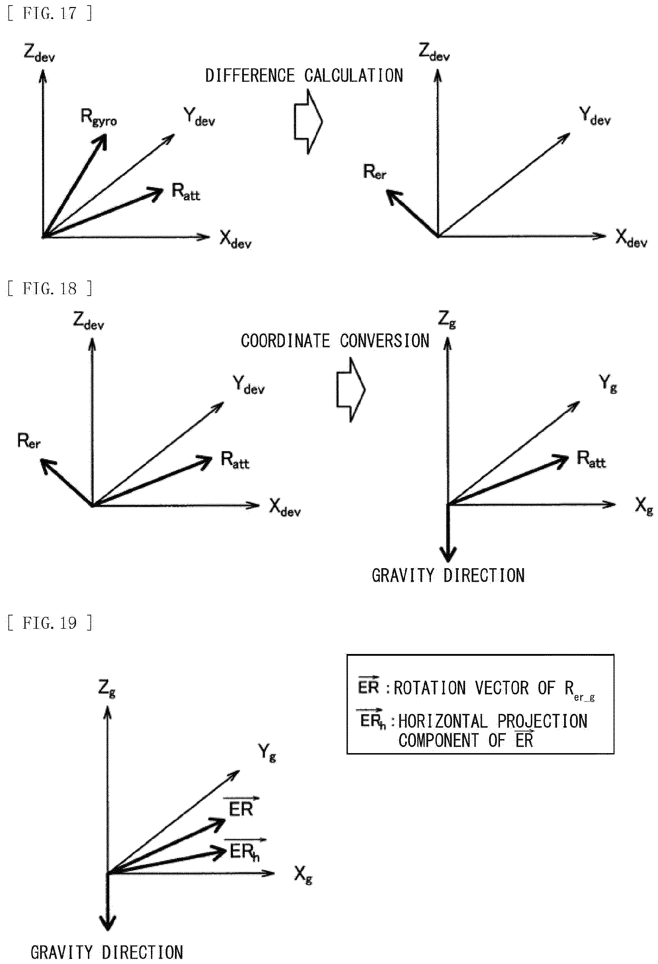

Here, referring to FIGs. 17 to 19, a process from the calculation of the rotation component on the basis of the fifth attitude and the sixth attitude to estimation of an azimuth will be described in detail.

(Calculation of Rotation Component)

First, referring to FIG. 17, calculation of the rotation component on the basis of the fifth attitude and the sixth attitude will be described. FIG. 17 is a diagram illustrating an example of calculating a rotation component according to the second embodiment of the present disclosure. A coordinate system of a graph including three axes of Xdev, Ydev, Zdev illustrated in FIG. 17 indicates a terminal coordinate system in the attitude information acquisition device.

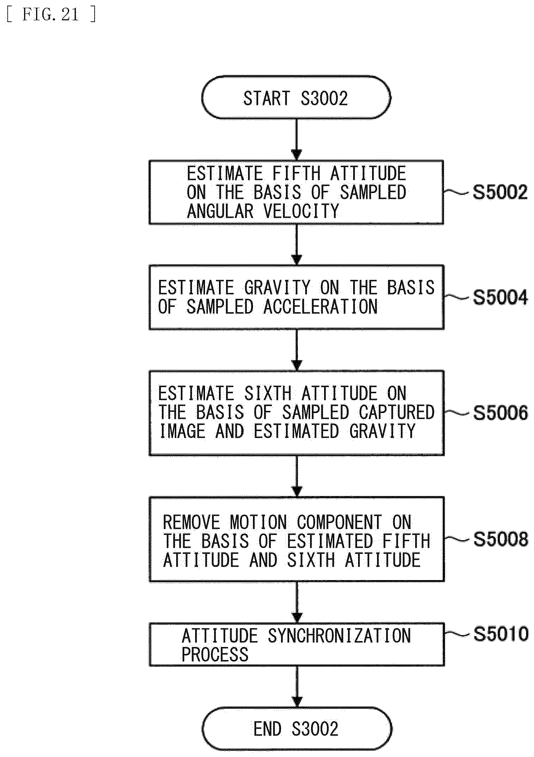

$R_{gyro}$ illustrated on the left side of FIG. 17 is an attitude matrix of the fifth attitude. Since $R_{gyro}$ is calculated on the basis of the angular velocity to be measured by the inertial measurement unit, $R_{gyro}$ may include the rotation component. $R_{att}$ illustrated on the left side of FIG. 21 is an attitude matrix of the sixth attitude. Since $R_{att}$ is calculated on the basis of the attitude information to be acquired by the attitude information acquisition device, $R_{att}$ does not include the rotation component.

$R_{er}$ illustrated on the right side of FIG. 17 is a rotation matrix of the rotation component. $R_{er}$ is also the difference between $R_{gyro}$ and $R_{att}$. The north-seeking process controller 144-2 is able to calculate the rotation component by calculating $R_{er}$ using the following Equation (3), for example.

[Math. 3]

$$R_{er} = R_{gyro} R_{att}^{-1} \quad \cdots (3)$$

(Coordinate Conversion)

Next, referring to FIG. 18, coordinate conversion of the rotation component will be described. FIG. 18 is a diagram illustrating an example of converting coordinates of the rotation component according to the second embodiment of the present disclosure. A coordinate system of a graph including three axes of Xg, Yg, and Zg illustrated on the right side of FIG. 18 indicates an absolute coordinate system.

$R_{er}$ illustrated on the left side of FIG. 18 is $R_{er}$ calculated using Equation (3). $R_{att}$ illustrated on the left side of FIG. 18 is an attitude matrix of the sixth attitude.

$R_{er\_g}$ illustrated on the right side of FIG. 18 is a rotation matrix of a rotation component converted into the absolute coordinate system. The north-seeking process controller 144-2 is able to calculate the rotation component converted into the absolute coordinate system by, for example, performing coordinate conversion on $R_{er}$ with $R_{att}$ using the following Equation (4).

[Math. 4]

$$R_{er\_g} = R_{er} R_{att} \quad \cdots (4)$$

Note that the direction in the terminal coordinate system corresponding to the direction of gravity in the absolute coordinate system does not necessarily point in the same direction as the direction of gravity in the absolute coordinate system, depending on the attitude of the terminal. Therefore, the north-seeking process controller 144-2 performs the coordinate conversion so that the direction in the terminal coordinate system corresponding to the direction of gravity in the absolute coordinate system faces the same direction as the direction of gravity in the absolute coordinate system.

(Azimuth Estimation)

Finally, referring to FIG. 19, azimuth estimation will be described. FIG. 19 is a diagram illustrating an example of estimating an azimuth according to the second embodiment of the present disclosure. A coordinate system of a graph including three axes of Xg, Yg, and Zg illustrated in FIG. 19 indicates an absolute coordinate system.

To estimate an azimuth from the rotation component converted into the absolute coordinate system, the north-seeking process controller 144-2 first converts $R_{er\_g}$ into a rotation vector. The north-seeking process controller 144-2 then projects the converted rotation vector on the horizon. For the projection of the rotation vector on the horizon, the z-component of the rotation vector may be set to 0. For example, a horizontal projection component of the rotation vector projected on the horizon is represented by the following Equation (5).

[Math. 5]

$$\overrightarrow{ER_h} = (ER_x, ER_y, 0) \quad \cdots (5)$$

The orientation indicated by the horizontal projection component is the north direction. Assuming that an absolute azimuth of the terminal is dir and an integration time period of the fifth attitude is $\Delta t$, the north-seeking process controller 144-2 is able to calculate the absolute azimuth dir by the following Equation (6).

[Math. 6]

$$dir = atan2(ER_x / \Delta t, ER_y / \Delta t) \quad \cdots (6)$$

After calculating the absolute azimuth dir, the north-seeking process controller 144-2 assigns $R_{att}$ to $R_{gyro}$ to make the fifth attitude the same as the sixth attitude (hereinafter also referred to as "synchronization"). This allows the north-seeking process controller 144-2 to reset an error caused by the rotation component contained in the fifth attitude by the sixth attitude that does not contain the error caused by the rotation component.

(5) Storage 160

The functions of storage 160 are the same as those described in <1.2.1. Functional Configuration Example>, and hence, the description in this in this chapter will be omitted.

Referring to FIGs. 16 to 19, the functional configuration example of the information processing apparatus according to the second embodiment of the present disclosure has been described. Subsequently, an operation example of the information processing apparatus according to the second embodiment of the present disclosure will be described.

<1.3.2. Operation Example>

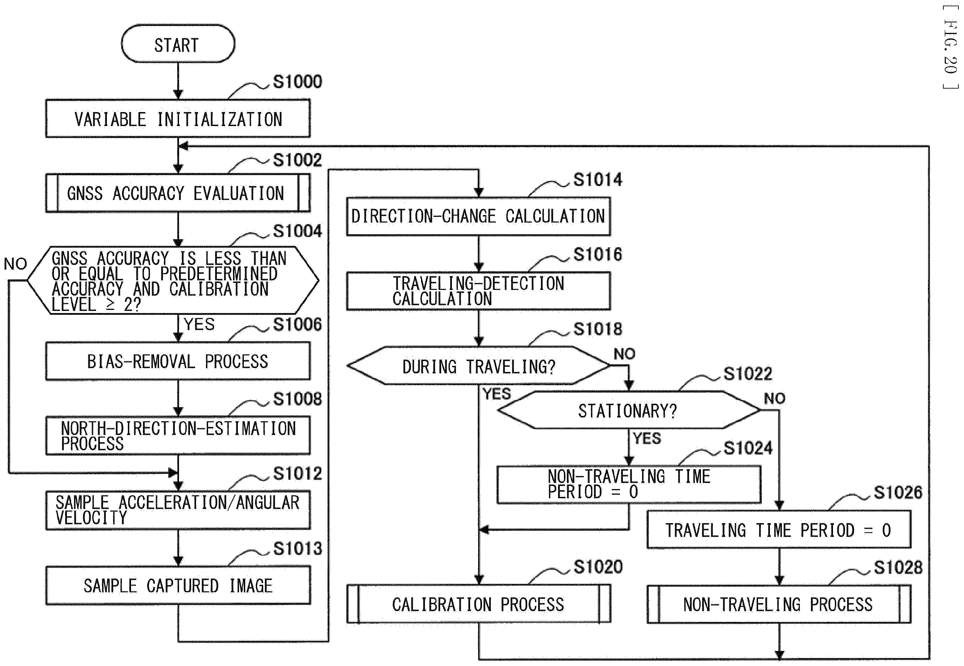

An operation example according to the second embodiment differs in part from the operation example according to the first embodiment. Hereinafter, referring to FIGs. 20 and 21, the operation example of the information processing apparatus according to the second embodiment of the present disclosure will be described.

(Main Process)

First, referring to FIG. 20, a main process according to the second embodiment will be described. FIG. 20 is a flowchart illustrating an operation example of the information processing apparatus according to the second embodiment of the present disclosure. As illustrated in FIG. 20, the main process according to the second embodiment differs from the main process according to the first embodiment in that the controller 140-2 samples the captured image (step S1013) after the sampling of the acceleration and the angular velocity. The processing other than the sampling of the captured image may be similar to the main process described in <1.2.2. Operation Example>. Accordingly, the process other than the sampling of the captured image will be omitted.

(GNSS-Accuracy-Evaluation Process)

A GNSS-accuracy-evaluation process according to the second embodiment may be similar to the GNSS-accuracy-evaluation process according to the first embodiment described in <1.2.2. Operation Example>. Accordingly, the description of the GNSS-accuracy-evaluation process will be omitted.

(Calibration Process)

A calibration process according to the second embodiment may be similar to the calibration process according to the first embodiment described in <1.2.2. Operation Example>. Accordingly, the description of the calibration process will be omitted.

(Motion-Component-Removal Process)

Referring now to FIG. 21, a motion-component-removal process according to the second embodiment will be described in detail. FIG. 21 is a flowchart illustrating the motion-component-removal process according to the second embodiment of the present disclosure. The motion-component-removal process according to the second embodiment is a process performed in S3002 of the calibration process illustrated in FIG. 14. In the motion-component-removal process according to the second embodiment, the motion component is removed using the captured image sampled in S1013 of the main process illustrated in FIG. 20.

As illustrated in FIG. 21, the controller 140-2 first estimates the fifth attitude on the basis of the sampled angular velocity (step S5002). The controller 140-2 estimates the gravity on the basis of the sampled acceleration (step S5004 ). The controller 140-2 then estimates the sixth attitude on the basis of the sampled captured image and the estimated gravity (step S5006). Subsequently, the controller 140-2 removes the motion component on the basis of the estimated fifth attitude and sixth attitude (step S5008). After removing the motion component, the controller 140-2 synchronizes the fifth attitude estimated on the basis of the angular velocity with the sixth attitude estimated on the basis of the captured image (step S5010).

(Non-Traveling Process)

A non-traveling process according to the second embodiment may be similar to the non-traveling process of the first embodiment described in <1.2.2. Operation Example>. Accordingly, the description of the non-traveling process will be omitted.

The operation example of the information processing apparatus according to the second embodiment of the present disclosure has been described above referring to FIGs. 20 and 21. Subsequently, a modification example according to the second embodiment of the present disclosure will be described.

<1.3.3. Modification Example>

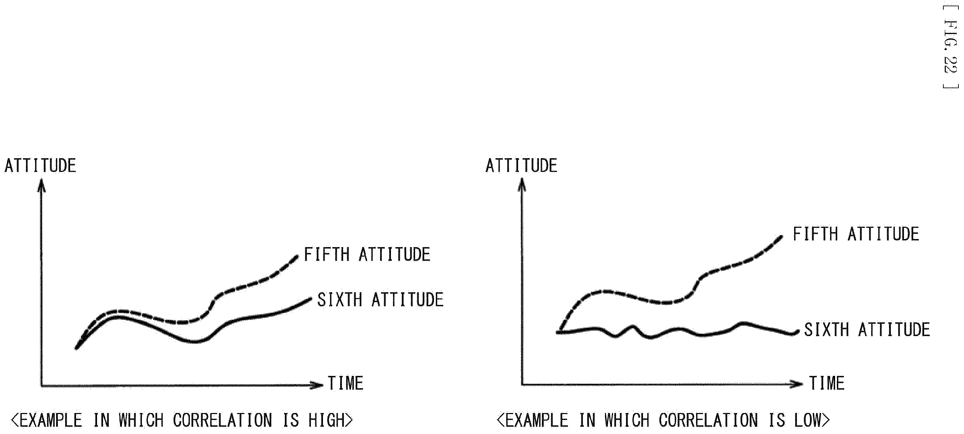

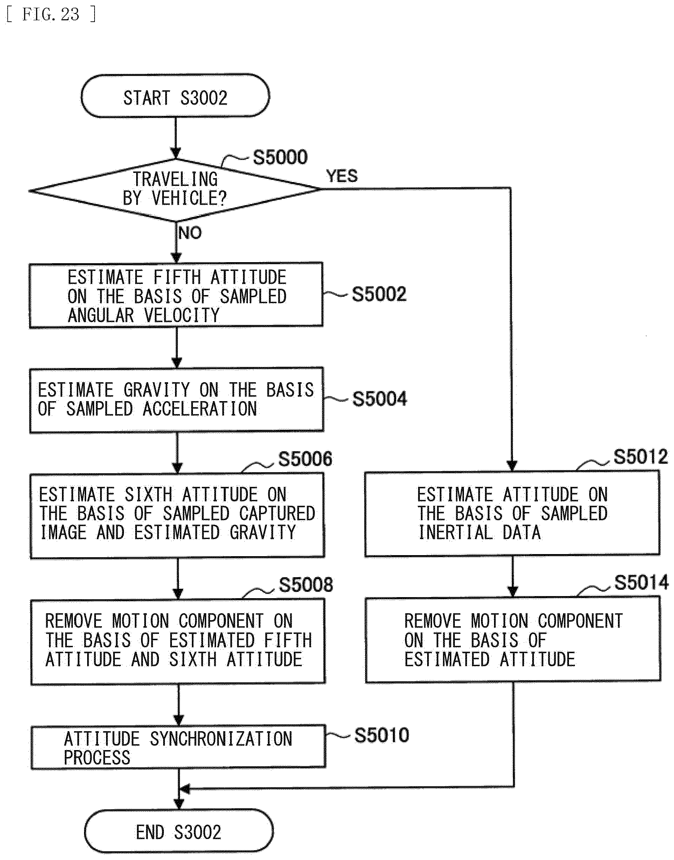

Hereinafter, referring to FIGs. 22 and 23, a modification example according to the second embodiment of the present disclosure will be described. FIG. 22 and FIG. 23 are each an explanatory diagram illustrating the modification example according to the second embodiment of the present disclosure. FIG. 22 illustrates correlations between the fifth attitude and the sixth attitude. FIG. 23 illustrates a flowchart of the motion-component-removal process. In the present modification example, it is assumed that the attitude information acquisition device is the imaging device, and the sixth attitude is calculated by the VSLAM or the like.

In the above second embodiment, the example has been described in which the controller 140-2 performs the motion-component-removal process using the attitude information acquired by the attitude information acquisition device. The motion component removed in the motion-component-removal process is a relative momentum of the mobile object with respect to the coordinate system of the earth. Therefore, it is necessary that the attitude information acquired by the attitude information acquisition device be information with respect to the coordinate system of the earth. In a case where the attitude information acquisition device is the imaging device, the information with respect to the coordinate system of the earth is, for example, an image showing the ground surface, a captured image showing buildings fixed to the ground, or the like.

However, in a case where the mobile object is in a traveling closed space (e.g., in another mobile object), there is a possibility that the attitude information acquired by the attitude information acquisition device may not include information corresponding to the earth, such as the ground surface or the buildings fixed to the ground. In the case where the information corresponding to the earth is not included, the information acquired by the attitude information acquiring information may be information with respect to the coordinate system of the other mobile object rather than the coordinate system of the earth. Therefore, if the motion-component-removal process is performed using the attitude information acquired when the mobile object is in the other mobile object, an error may occur in the calculated motion component.

Accordingly, in the modification example according to the second embodiment, the controller 140-2 may determine whether or not to use the attitude information acquired by the attitude information acquisition device depending on whether or not there is a mobile object in the traveling closed space, in other words, whether or not the mobile object is traveling in the other mobile object. Hereinafter, as an example, an example in which the other mobile object is a traveling vehicle will be described. Examples of the vehicle is, for example, a train, a car, an airplane, a vessel, and the like.

In the case where the mobile object is not traveling by the vehicle, the controller 140-2 determines to use the attitude information acquired by the attitude information acquisition device, because the attitude information acquisition device is able to acquire information of the ground surface or an object fixed to the ground. Then, the controller 140-2 performs the motion-component-removal process using the attitude information acquired by the attitude information acquisition device. With such a configuration, the controller 140-2 is able to reduce an error generated in the motion-component-removal process. Moreover, the controller 140-2 may also reduce an azimuth error included in the azimuth estimated on the basis of a result of the motion-component-removal process.

In contrast, in a case where the mobile object is traveling by the vehicle, it is difficult for the attitude information acquisition device to acquire information of the ground surface or the object fixed to the ground, and therefore, the controller 140-2 determines that the attitude information acquired by the attitude information acquisition device is not used. Then, the motion-component-removal process is performed using the inertial data measured by the inertial measurement unit without using the attitude information acquired by the attitude information acquisition device. With such a configuration, the controller 140-2 is able to reduce the error generated in the motion-component-removal process. Moreover, the controller 140-2 may also be able to reduce the azimuth error included in the azimuth estimated on the basis of the result of the motion-component-removal process.

Whether or not the mobile object is traveling by the vehicle is determined on the basis of a correlation between the first traveling information estimated on the basis of the inertial data measured by the inertial measurement unit and the second traveling information estimated on the basis of the attitude information acquired by the attitude information acquisition device. Hereinafter, it is assumed that, for example, the inertial data is an angular velocity, the first traveling information is the fifth attitude, and the second traveling information is the sixth attitude. The fifth attitude and the sixth attitude may change over time, as illustrated in the graphs of FIG. 22.

In a case where the mobile object is not traveling by the vehicle, the sixth attitude is estimated on the basis of the relative momentum of the mobile object with respect to the coordinate system of the earth. The correlation between the fifth attitude and the sixth attitude may thus be kept high over time. For example, as illustrated on the left side of FIG. 22, the correlation between the fifth attitude and the sixth attitude remain high over time.

In contrast, in a case where the mobile object is traveling by the vehicle, the sixth attitude is estimated on the basis of the relative momentum of the mobile object with respect to the coordinate system inside the traveling vehicle. The correlations between the fifth attitude and the sixth attitude may thus decrease over time. For example, as illustrated in the right side of FIG. 22, the correlation between the fifth attitude and the sixth attitude decreases over time.

Then, the controller 140-2 determines whether or not the mobile object is traveling by the vehicle on the basis of whether or not the correlation between the fifth attitude and the sixth attitude is higher than a predetermined threshold.

If the correlation between the fifth attitude and the sixth attitude is higher than the predetermined threshold, the controller 140-2 determines that the mobile object is not traveling by the vehicle. In the case where it is determined that the mobile object is not traveling by the vehicle, the controller 140-2 acquires the motion component using the attitude information acquired by the attitude information acquisition device. With such a configuration, the controller 140-2 is able to reduce the error generated in the motion-component-removal process. Moreover, the controller 140-2 may also be able to reduce the azimuth error included in the azimuth estimated on the basis of the result of the motion-component-removal process.

Accordingly, if it is determined that the correlation between the fifth attitude and the sixth attitude is lower than the predetermined threshold, the controller 140-2 determines that the mobile object is traveling by the vehicle. In the case where it is determined that the mobile object is traveling by the vehicle, the controller 140-2 acquires the motion component on the basis of at least two pieces of information measured by the inertial measurement unit, without using the attitude information acquired by the attitude information acquisition device. With such a configuration, the controller 140-2 is able to reduce the error generated in the motion-component-removal process. The controller 140-2 may also be able to reduce the azimuth error included in the azimuth estimated on the basis of the result of the motion-component-removal process.

It is to be noted that, in the present modification example, since the determination is performed on whether or not the mobile object is traveling by the vehicle, the flow of the motion-component-removal process differs from the flow illustrated in FIG. 21 in some parts. As illustrated in FIG. 23, in the motion-component-removal process according to the present modification example, first, the controller 140-2 determines whether or not mobile object is traveling by the vehicle (step S5000). In a case where it is determined that the mobile object is not traveling by the vehicle (step S5000/NO), the controller 140-2 performs steps S5002 to S5010 in the same manner as in the example illustrated in FIG. 21. In contrast, in a case where it is determined that the mobile object is traveling by the vehicle (step S5000/YES), the controller 140-2 estimates the attitude of the mobile object on the basis of the sampled inertial data (step S5012). The controller 140-2 then removes the motion component on the basis of the estimated attitude (step S5014).

The gravity calculated on the basis of the acceleration to be measured when the acceleration sensor functions as the attitude information acquisition device is not influenced by whether or not the mobile object is in the traveling closed space. Thus, the controller 140-2 may use the gravity to acquire the motion component even if the mobile object is in a space within the vehicle, i.e., the mobile object is traveling by the vehicle.

The second embodiment of the present disclosure has been described above by referring to FIGs. 16 to 23. Subsequently, a third embodiment of the present disclosure will be described.


<1.4. Third Embodiment>


In the above-described embodiments, the examples have been described in which the inertial measurement section 120 measures the angular velocities in two directions different from each other by changing the direction in which the drone 10 is traveling or stationary. In the third embodiment, a mechanism for changing the attitude of the inertial measurement unit is provided to the drone 10, and the attitude of the inertial measurement section 120 is automatically changed by the mechanism. It is to be noted that, in the following, the description of the points overlapping with the first embodiment and the second embodiment will be omitted as appropriate.

As an example of the mechanisms for changing the attitude of the inertial measurement section 120, there is given a rotation mechanism that rotates the attitude of the inertial measurement section 120. Examples of such a rotation mechanism include: a mechanism for rotating a disk provided with the inertial measurement section 120; and a robotic arm having a plurality of degrees of freedom in which the inertial measurement section 120 is provided at an end of the arm. The inertial measurement section 120 is provided, for example, at a position where the attitude changes in accordance with the operation of the rotation mechanism, and when the rotation mechanism rotates, the inertial measurement section 120 also rotates, and thereby changing the attitude of the inertial measurement section 120. With such a configuration, since the orientation of the inertial measurement section 120 automatically changes, the inertial measurement section 120 is able to measure the angular velocities in two directions different from each other without changing the direction in which the drone 10 is traveling or stationary by itself.

It is to be noted that a timing at which the attitude of the inertial measurement unit 20 is controlled is not particularly limited, but it is desirable to be the timing after an angular velocity in any one direction is measured by the inertial measurement unit 20. Hereinafter, examples will be described in which the attitude of the inertial measurement unit 20 is changed after the angular velocity in any one direction is measured by the inertial measurement unit 20.

<1.4.1. Functional Configuration Example>

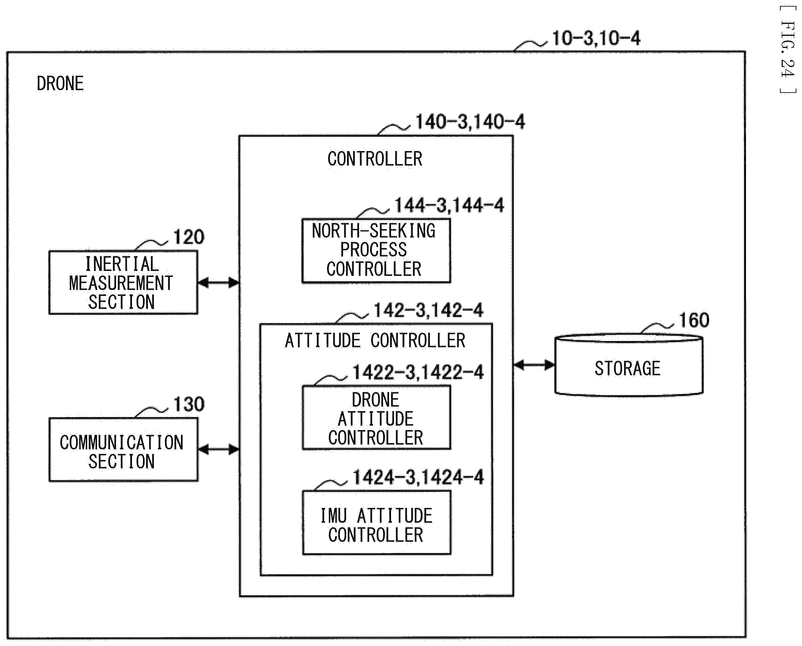

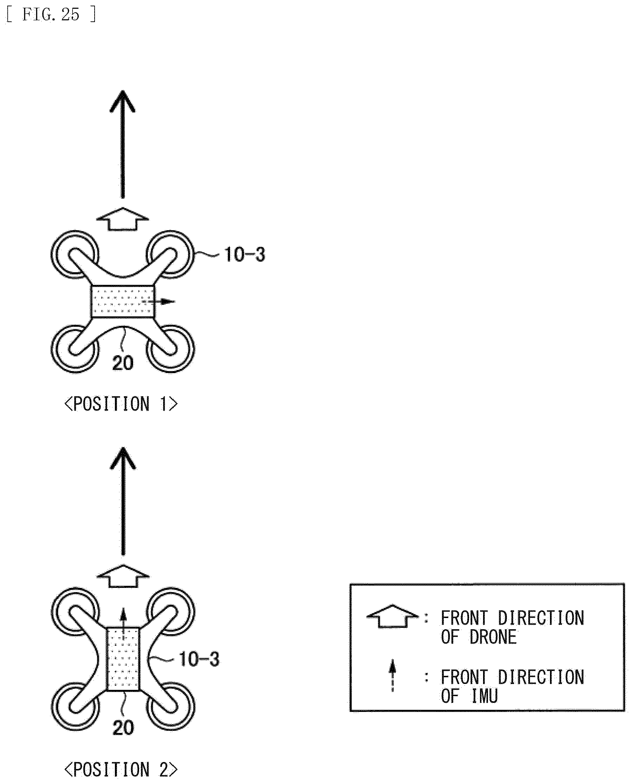

Hereinafter, referring to FIGs. 24 and 25, a functional configuration example of an information processing apparatus according to the third embodiment of the present disclosure will be described. FIG. 24 is a block diagram illustrating a functional configuration example of an information processing apparatus according to third and fourth embodiments of the present disclosure.

As illustrated in FIG. 24, a drone 10-3 according to the third embodiment of the present disclosure includes the inertial measurement section 120, the communication section 130, a controller 140-3, and the storage 160.

(1) Inertial Measurement Section 120

The functions of the inertial measurement section 120 are the same as those described in <1.2.1. Functional Configuration Example>, and hence, the description in this chapter will be omitted.

(2) Communication Section 130

The functions of the communication section 130 are the same as those described in <1.2.1. Functional Configuration Example>, and hence, the description in this chapter will be omitted.

(3) Controller 140-3

Functions of the controller 140-3 differ in part from the functions of controller 140 described in the above embodiments.

(3-1) Attitude Controller 142-3

An attitude controller 142-3 has a function of controlling an attitude of the IMU in addition to the function of controlling the attitude of the drone 10 included in the attitude controller 142 described in the above embodiments. In order to achieve the function, the attitude controller 142-3 includes a drone attitude controller 1422-3 and an IMU attitude controller 1424-3 as illustrated in FIG. 24.

(3-1-1) Drone Attitude Controller 1422-3

The drone attitude controller 1422-3 has a function similar to that of the attitude controller 142-1 and the attitude controller 142-2 described in the above-described embodiments, and controls the attitude of the drone 10-3.

(3-1-2) IMU Attitude Controller 1424-3

The IMU attitude controller 1424-3 has a function of controlling an attitude of the inertial measurement unit 20. For example, the IMU attitude controller 1424-3 controls an operation of a mechanism for changing the attitude of the inertial measurement unit 20 provided to the drone 10-3. In the present embodiment, the IMU attitude controller 1424-3 changes the attitude of the inertial measurement section 120 provided to the rotation mechanism by rotating the rotation mechanism.

Referring now to FIG. 25, an example of controlling the attitude of the inertial measurement unit 20 by the IMU attitude controller 1424-3 will be described. FIG. 25 is an explanatory diagram illustrating an example of controlling the attitude of the inertial measurement unit 20 according to the third embodiment of the present disclosure.

The IMU attitude controller 1424-3 controls, as an example, the attitude of the inertial measurement unit such that orientations of the inertial measurement unit when the inertial measurement unit measures at least two angular velocities differs from each other. As illustrated in FIG. 25, at the position 1, the front direction of the drone 10-3 coincides with the front direction of the inertial measurement unit 20. In this condition, the drone 10-3 travels from the position 1 to the position 2, thereby causing the inertial measurement unit 20 to measure the angular velocity in the first direction. The IMU attitude controller 1424-3 then rotates the rotation mechanism as the drone 10-3 travels straight from the position 1 to the position 2. As a result, at the position 2, the front direction of the drone 10-3 and the front direction of the inertial measurement unit 20 differ from each other. Then, the drone 10-3 further travels straight from the position 2, and the inertial measurement unit 20 measures the angular velocity in the second direction.

With such a configuration, the inertial measurement unit 20 is able to measure the angular velocities in two different directions while the drone 10-3 is traveling in any one direction. Further, since the orientation of the inertial measurement unit 20 is automatically changed, the drone 10-3 does not have to intentionally change the traveling directions.

The control of the attitude of the inertial measurement unit 20 by the IMU attitude controller 1424-3 is particularly useful in situations where the direction-change amount of the drone 10-3 is small. Specifically, the control of the attitude of the inertial measurement unit 20 is useful in situations where it is difficult to change the traveling directions of the drone 10-3, such as narrow roads, building streets, crowds, and locations with many obstacles.

(3-2) North-Seeking Process Controller 144-3

Functions of a north-seeking process controller 144-3 are the same as the functions of the north-seeking process controller 144 described in the above embodiments, and hence, the description in this chapter will be omitted.

(4) Storage 160

The functions of the storage 160 are the same as those described in <1.2.1. Functional Configuration Example>, and hence, the description in this chapter will be omitted.

The functional configuration example of the information processing apparatus according to the third embodiment of the present disclosure has been described above referring to FIGs. 24 and 25.

<1.5. Fourth Embodiment>

In a fourth embodiment, examples will be described in which the IMU attitude controller 1424 also controls a timing at which the attitude of the inertial measurement unit 20 is changed. It is to be noted that, in the following, descriptions of the points overlapping with the first to third embodiments will be omitted as appropriate.

<1.5.1. Functional Configuration Example>

Hereinafter, referring to FIGs. 24 and FIGs. 26 to 28, a functional configuration example of an information processing apparatus according to the fourth embodiment of the present disclosure will be described as illustrated in FIG. 24, a drone 10-4 according to the fourth embodiment of the present disclosure includes the inertial measurement section 120, the communication section 130, a controller 140-4, and the storage 160.

(1) Inertial Measurement Section 120

The functions of the inertial measurement section 120 are the same as those described in <1.2.1. Functional Configuration Example>, and hence, the description in this chapter will be omitted.

(2) Communication Section 130

The functions of the communication section 130 are the same as those described in <1.2.1. Functional Configuration Example>, and hence, the description in this chapter will be omitted.

(3) Controller 140-4

Functions of the controller 140-4 differ in part from the functions of controller 140 described in the above embodiments.

(3-1) Attitude Controller 142-4

Among functions of an attitude controller 142-4, a function of controlling the attitude of the drone 10-4 is the same as the function described in the above embodiment, but a function of controlling the attitude of the inertial measurement unit 20 differs in part from the function described in the above embodiment. In order to achieve this function, the attitude controller 142-4 includes a drone attitude controller 1422-4 and an IMU attitude controller 1424-4 as illustrated in FIG. 24.

(3-2-1) Drone Attitude Controller 1422-4

The functions of the drone attitude controller 1422-4 are the same as those of the drone attitude controller 1422-3 described in the above embodiment, and hence, the description thereof is omitted in this chapter.

(3-2-2) IMU Attitude Controller 1424-4

In addition to the functions of the IMU attitude controller 1424-3 described in the above embodiment, the IMU attitude controller 1424-4 also has a function of controlling a timing at which the attitude of the inertial measurement unit 20 is changed.

Examples of the timing include the timing after the first angular velocity is measured by the inertial measurement unit 20. After the measurement of the first angular velocity, the IMU attitude controller 1424-4 determines whether or not to change the attitude of the inertial measurement unit 20 depending on whether or not the attitude of the drone 10-4 has changed before a predetermined time period (a first time period) elapses from a time when the first angular velocity is measured. Note that the time period set as the first time period is not particularly limited, and any time period may be set.

If the attitude of the drone 10-4 changes before the first time period elapses from the time when the first angular velocity is measured, the IMU attitude controller 1424-4 does not change the attitude of the inertial measurement unit 20 (i.e., fixes the attitude). With such a configuration, the IMU attitude controller 1424-4 is able to cause the inertial measurement unit 20 to measure a second angular velocity in the traveling direction of the drone 10-4 after the attitude change.

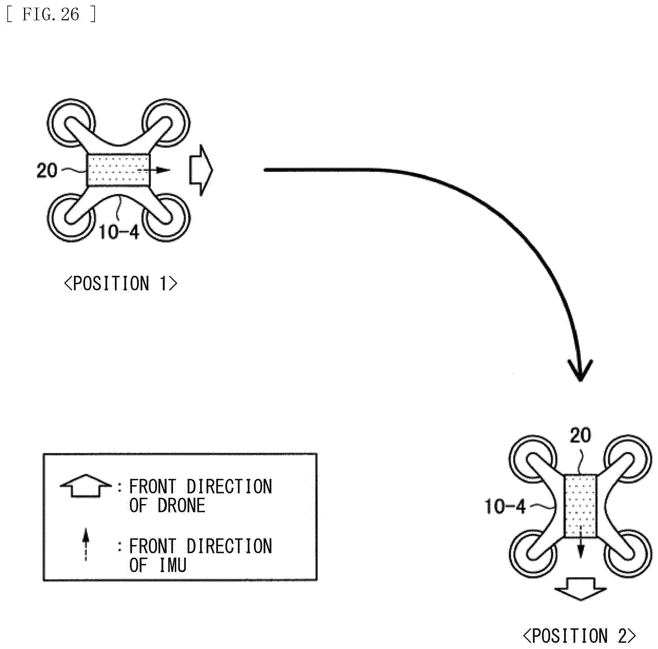

Now, referring to FIG. 26, a case will be described in which the IMU attitude controller 1424-4 does not change the attitude of the inertial measurement unit 20. FIG. 26 is an explanatory diagram illustrating an example of controlling the attitude of the inertial measurement unit 20 according to the fourth embodiment of the present disclosure.

In the position 1 illustrated in FIG. 26, the front direction of the drone 10-4 coincides with the front direction of the inertial measurement unit 20. Further, it is assumed that the position 1 is a position at which the measurement of the first angular velocity is completed in any direction. When the drone 10-4 travels from the position 1 to the position 2, it is assumed that the traveling direction is changed by rotating the airframe. At this time, the IMU attitude controller 1424-4 checks whether or not the first time period has elapsed from the completion of the measurement of the first angular velocity until the drone 10-4 rotates the airframe. The example illustrated in FIG. 26 is an example in which the first time period has not elapsed. Thus, the IMU attitude controller 1424-4 does not change the attitude of the inertial measurement unit 20, and keeps the front direction of the drone 10-4 and the front direction of the inertial measurement unit 20 coincide with each other.

In contrast, if the attitude of the drone 10-4 does not change until the first time period elapses from the time when a first piece of information is acquired, the IMU attitude controller 1424-4 changes the attitude of the inertial measurement unit 20. With such a configuration, the IMU attitude controller 1424-4 is able to allow the inertial measurement unit 20 to measure the angular velocities in two different directions while the drone 10-4 is kept traveling in any one direction.

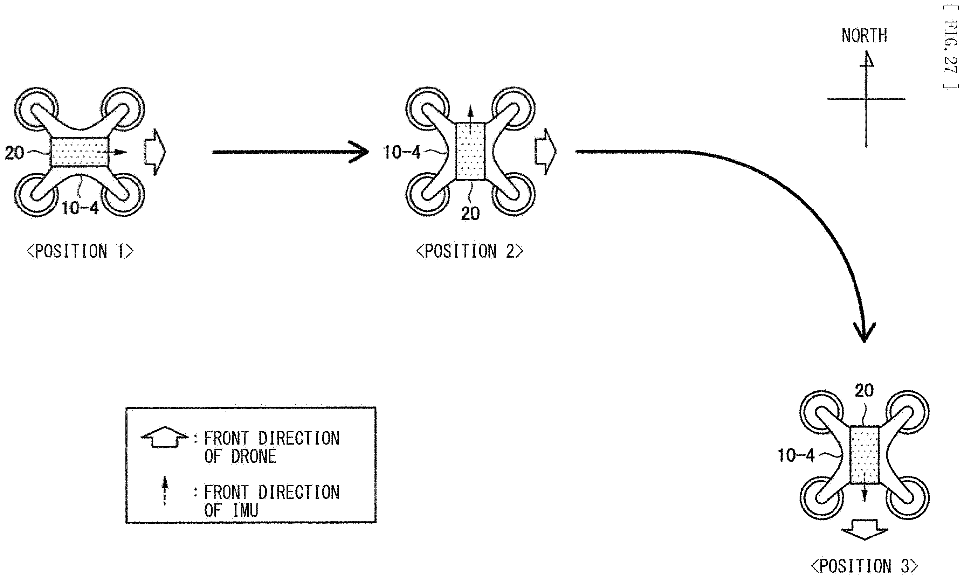

Now, referring to FIG. 27, an example in which the IMU attitude controller 1424-4 changes the attitude of the inertial measurement unit 20 will be described. FIG. 27 is an explanatory diagram illustrating an example of controlling the attitude of the inertial measurement unit 20 according to the fourth embodiment of the present disclosure.

The position 1 illustrated in FIG. 27 is a state in which the front direction of the drone 10-4 coincides with the front direction of the inertial measurement unit 20. Further, it is assumed that the position 1 is a position at which the measurement of the first angular velocity is completed in any one direction. Assume that the drone 10-4 travels from the position 1 to the position 2 without rotating the airframe. At this time, the IMU attitude controller 1424-4 checks whether or not the first time period has elapsed since the completion of the measurement of the first angular velocity. The example illustrated in FIG. 27 is an example in which the first time period has elapsed at the time point at which the drone 10-4 has traveled to the position 2. Accordingly, the IMU attitude controller 1424-4 changes the attitude of the inertial measurement unit 20 so that the front direction of the drone 10-4 differs from the front direction of the inertial measurement unit 20.

Another example of the timing at which the IMU attitude controller 1424-4 controls the attitude of the inertial measurement unit 20 is a timing after the change in the attitude of the inertial measurement unit 20. After the change in the attitude of the inertial measurement unit 20, the IMU attitude controller 1424-4 determines whether or not to change the attitude of the inertial measurement unit 20 depending on whether or not the attitude of the drone 10-4 has changed before a predetermined time period (a second time period) elapses from the change in the attitude of the inertial measurement unit 20. Note that, although the time period set as the second time period is not particularly limited, it is desirable that the time period be a time necessary for acquiring the second angular velocity by the inertial measurement unit 20.

If the attitude of the drone 10-4 has changed before the second time period elapses from the change in the attitude of the inertial measurement unit 20, the IMU attitude controller 1424-4 further changes the attitude of the inertial measurement unit 20. With such a configuration, even if the rotation of the inertial measurement unit 20 is offset by the change in the attitude of the drone 10-4, the IMU attitude controller 1424-4 is able to cause the inertial measurement unit 20 to measure the second angular velocity again by rotating the inertial measurement unit 20 again.

Now, referring to FIG. 27, an example will be described in which the IMU attitude controller 1424-4 further changes the attitude of the inertial measurement unit 20. The position 2 illustrated in FIG. 27 is a state in which the front direction of the drone 10-4 differs from the front direction of the inertial measurement unit 20. Further, the position 2 is a position at which the attitude of the inertial measurement unit 20 attitude has changed. When the drone 10-4 travels from the position 2 to the position 3, it is assumed that the drone 10-4 travels by changing the traveling direction by rotating the airframe. At this time, the IMU attitude controller 1424-4 checks whether or not the second time period has elapsed since the change in the attitude of the inertial measurement unit 20. The example illustrated in FIG. 27 is an example in which the second period has not elapsed at the time point at which the drone 10-4 rotates the airframe. The IMU attitude controller 1424-4 thus further changes the attitude of the inertial measurement unit 20.

It is to be noted that the IMU attitude controller 1424-4 detects the amount of change in the attitude of the drone 10-4 for a given time period on the basis of the angular velocity measured by the inertial measurement unit 20, and decides the rotation amount of the inertial measurement unit 20 in accordance with the amount of change. The IMU attitude controller 1424-4 then controls the attitude of the inertial measurement unit 20 such that the inertial measurement unit 20 is oriented at various orientations with respect to the coordinate system of the earth.

(3-2) North-Seeking Process Controller 144-4

Functions of a north-seeking process controller 144-4 include a function of calculating an airframe absolute azimuth in addition to the functions of the north-seeking process controller 144 described in the above embodiments.

(First Calculation Example)

When the inertial measurement unit 20 is rotated by the control of the IMU attitude controller 1424-4, a deviation equal to the rotation amount of the inertial measurement unit 20 occurs between the orientation of the inertial measurement unit 20 and the orientation of the airframe of the drone 10-4. In an azimuth estimated on the basis of the angular velocity measured by the inertial measurement unit 20 in the state where the deviation occurs, an error depending on the rotation amount occurs. Accordingly, the north-seeking process controller 144-4 calculates the azimuth of the airframe of the drone 10-4 by taking a difference between the azimuth estimated on the basis of the angular velocity of the inertial measurement unit 20 and the rotation amount of the inertial measurement unit 20 (the rotation mechanism). In the first calculation example, the rotation amount of the rotation mechanism is measured by a rotation amount measurement device provided to the drone 10-4.

Hereinafter, the azimuth calculated on the basis of the angular velocity of the inertial measurement unit 20 is also referred to as "IMU absolute azimuth". Further, the azimuth of the airframe of the drone 10-4 is also referred to as "airframe absolute azimuth". The airframe absolute azimuth is calculated by the following Equation (7).

[Math. 7]

$$\text{Airframe absolute azimuth} = \text{IMU absolute azimuth} - \text{rotation amount of rotation}$$

$$\text{mechanism} \qquad \ldots (7)$$

Referring now to FIG. 27, the first calculation example of the airframe absolute azimuth will be described. It is to be noted that, in the first calculation example, the absolute azimuth is indicated as follows: the north is 0 degree as a reference, the east is 90 degrees, the west is -90 degrees, and the south is ±180 degrees. Further, in the first calculation example, the rotation amount when the rotation mechanism rotates 90 degrees clockwise with respect to the front direction of the drone 10-4 is 90 degrees, and the rotation amount when the rotation mechanism rotates counterclockwise is -90 degrees.

For example, it is assumed that the IMU absolute azimuth is calculated to be 90 degrees at the position 1 illustrated in FIG. 27. At the position 1, the rotation amount is 0 degree because the rotation mechanism is not rotated. Therefore, from the above Equation (7), the airframe absolute azimuth is calculated as follows: 90 degrees - 0 degree = 90 degrees.

Further, it is assumed that the IMU absolute azimuth is calculated to be 0 degree at the position 2 illustrated in FIG. 27. At the position 2, the rotation amount is -90 degrees because the rotation mechanism has rotated 90 degrees counterclockwise from the state at the position 1. Therefore, from the above Equation (7), the airframe absolute azimuth is calculated as follows: 0 degree - (-90 degrees) = 90 degrees.

Further, it is assumed that the IMU absolute azimuth is calculated to be 180 degrees at the position 3 illustrated in FIG. 27. At the position 3, the rotation amount is 0 degree because the rotation mechanism has rotated 90 degrees clockwise from the state at the position 2. Therefore, from the above Equation (7), the airframe absolute azimuth is calculated as follows: 180 degrees - 0 degree = 180 degrees.

(Second Calculation Example)

Generally, a rotation amount measurement device may be large and expensive. Further, the rotation amount measurement device can only measure the rotation amount in the plane one-axis. Thus, if a three-dimensional attitude change is made, such as the airframe of the drone 10-4 rolling, an error may occur in the azimuth change of the airframe. Therefore, the airframe of the drone 10-4 in the second calculation example is fixedly provided with an inertial measurement unit that differs from the inertial measurement unit 20 provided to the rotation mechanism. With such a configuration, it becomes possible to grasp three-dimensionally the attitude of the airframe. In addition, it is possible to achieve a smaller size and a lower cost compared to the case where the rotation amount measurement device is used.

Hereinafter, an amount of change in the azimuth of the inertial measurement unit 20 is also referred to as "IMU azimuth change". Further, an amount of change in the azimuth of the airframe of the drone 10-4 is also referred to as "airframe azimuth change". The airframe absolute azimuth is calculated by the following Equation (8).

[Math. 8]

$$\text{Airframe absolute azimuth} = \text{IMU absolute azimuth} - (\text{airframe azimuth change} - \text{IMU}$$

$$\text{azimuth change)... (8)}$$

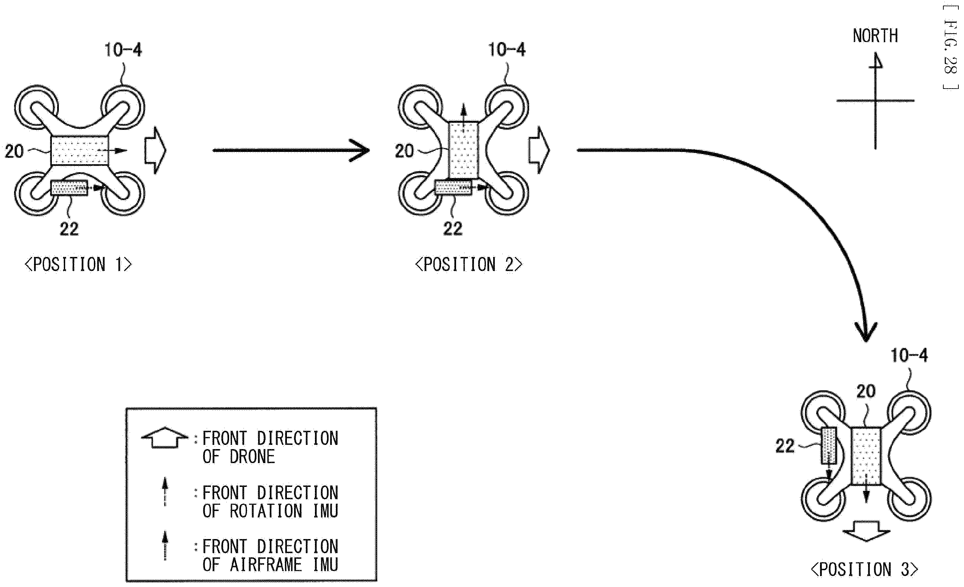

Referring now to FIG. 28, the second calculation example of the airframe absolute azimuth will be described. FIG. 28 is an explanatory diagram illustrating an example in which two inertial measurement units are provided according to the fourth embodiment of the present disclosure.

As illustrated in FIG. 28, the drone 10-4 is provided with an inertial measurement unit 20 (hereinafter also referred to as "rotation IMU") for calculating the IMU azimuth change, and an inertial measurement unit 22 (hereinafter also referred to as "airframe IMU") for calculating the airframe azimuth change. It is assumed that the rotation IMU is provided on the rotation mechanism, and the airframe IMU is fixedly provided to the airframe of the drone 10-4.

It is to be noted that, in the second calculation example, the absolute azimuth is indicated as follows: the north is 0 degree as a reference, the east is 90 degrees, the west is -90 degrees, and the south is $\pm$180 degrees. Further, in the second calculation example, the airframe azimuth change when the drone 10-4 rotates 90 degrees clockwise from the previous position is 90 degrees, and the airframe azimuth change when the drone 10-4 rotates 90 degrees counterclockwise is -90 degrees. Further, in the second calculation example, the IMU azimuth change when the rotation mechanism rotates 90 degrees clockwise is 90 degrees, and the IMU azimuth change when the rotation mechanism rotates 90 degrees counterclockwise is -90 degrees.

For example, it is assumed that the IMU absolute azimuth is calculated to be 90 degrees at the position 1 illustrated in FIG. 28. At the position 1, since the rotation mechanism is not rotated, the IMU azimuth change calculated on the basis of the measurement value of the rotation IMU is 0 degree. Since the drone 10-4 is not rotated, the airframe azimuth change calculated on the basis of the measurement value of the airframe IMU is 0 degree. Therefore, from the above Equation (8), the airframe absolute azimuth is calculated as follows: 90 degrees - (0 degree - 0 degree) = 90 degrees.

Further, it is assumed that the IMU absolute azimuth is calculated to be 0 degree at the position 2 illustrated in FIG. 28. At the position 2, since the rotation mechanism is rotated 90 degrees counterclockwise from the state at the position 1, the IMU azimuth change calculated on the basis of the measurement value of the rotation IMU is -90 degrees. Further, since the drone 10-4 is not rotated from the state at the position 1, the airframe azimuth change calculated on the basis of the measurement value of the airframe IMU is 0 degree. Therefore, from the above Equation (8), the airframe absolute azimuth is calculated as follows: 0 degree - (0 degree - 90 degrees) = 90 degrees.

Further, it is assumed that the IMU absolute azimuth is calculated to be 180 degrees at the position 3 illustrated in FIG. 28. At the position 3, since the rotation mechanism is rotated by 90 degrees clockwise from the state at the position 2, the IMU azimuth change calculated on the basis of the measurement value of the rotation IMU is 90 degrees. Further, since the drone 10-4 is rotated 90 degrees clockwise from the state at the position 2, the airframe azimuth change calculated on the basis of the measurement value of the airframe IMU is 90 degrees. Therefore, from the above Equation (8), the airframe absolute azimuth is calculated as follows: 180 degrees - (90 degrees - 90 degrees) = 180 degrees.

(4) Storage 160

The functions of the storage 160 are the same as those described in <1.2.1. Functional Configuration Example>, and hence, the description in this chapter will be omitted.

The functional configuration example of the information processing apparatus according to the fourth embodiment of the present disclosure has been described above by referring to FIGs. 24 and FIGs. 26 to 28. Subsequently, an operation example of the information processing apparatus according to the fourth embodiment of the present disclosure will be described.

<1.5.2. Operation Example>

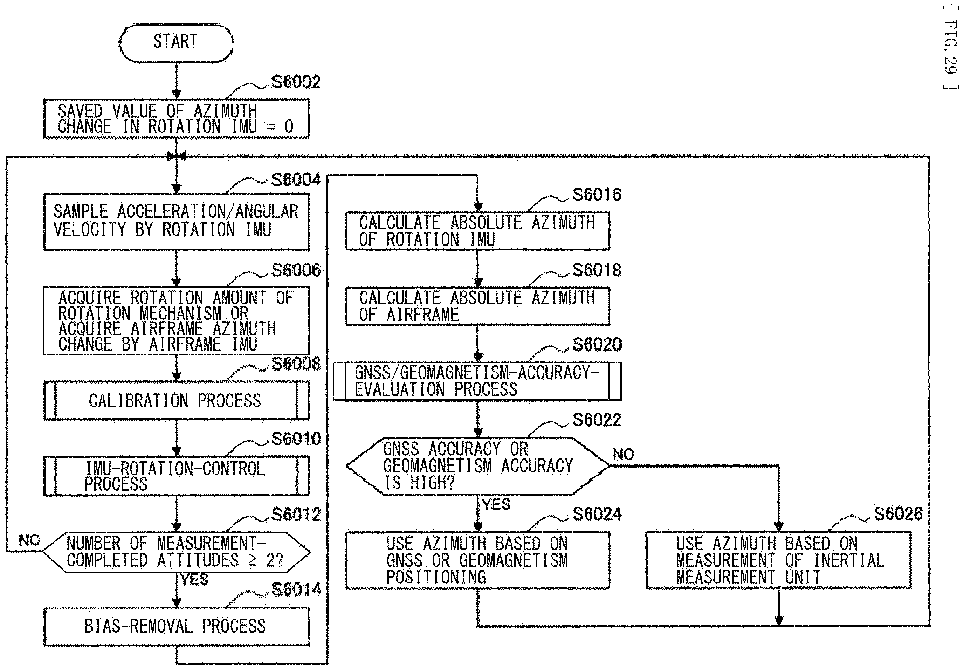

An operation example according to the fourth embodiment differs in part from the operation examples according to the embodiments described above. Hereinafter, referring to FIGs. 29 to 31, the operation example of the information processing apparatus according to the fourth embodiment of the present disclosure will be described.

(Main Process)

First, referring to FIG. 29, a main process according to the fourth embodiment will be described. FIG. 29 is a flowchart illustrating an operation example of the information processing apparatus according to the fourth embodiment of the present disclosure.

As illustrated in FIG. 29, first, the controller 140-4 sets a saved value of the azimuth change in the rotation IMU to 0 (step S6002). Incidentally, the saved value is used in an "IMU-rotation-control process" to be described later. The controller 140-4 then causes the rotation IMU to sample an acceleration/angular velocity (step S6004).

In a case where the airframe absolute azimuth is to be calculated as in the first calculation example described above, the controller 140-4 acquires the rotation amount of the rotation mechanism (step S6006). In a case where the airframe absolute azimuth is to be calculated as in the second calculation example described above, the controller 140-4 acquires the airframe azimuth change by the airframe IMU (step S6006).

The controller 140-4 then performs the calibration process (step S6008). In the calibration process, the process described referring to FIG. 14 is performed.

The controller 140-4 then performs the IMU-rotation-control process (step S6020). The details of the IMU-rotation-control process will be described below.

After the IMU-rotation-control process, the controller 140-4 checks whether or not the number of measurement-completed attitudes is greater than or equal to two (step S6012). If the number of measurement-completed attitudes is not greater than or equal to two (step S6012/NO), the controller 140-4 repeats the process from step S6004. If the number of measurement-completed attitudes is greater than or equal to two (step S6012/YES), the controller 140-4 performs the bias-removal process (step S6014). It is to be noted that the number of measurement-completed attitudes is not particularly limited as long as it is two or more. The larger the number of measurement-completed attitudes, the more accurate the bias estimation can be.

After the bias-removal process, the controller 140-4 calculates the absolute azimuth of the rotation IMU (step S6016). The controller 140-4 then calculates the absolute azimuth of the airframe (step S6018).

After calculating the absolute azimuth of the airframe, the controller 140-4 performs a GNSS/geomagnetism-accuracy-evaluation process (step S6020). The GNSS/geomagnetism-accuracy-evaluation process will be described in detail later.

After the GNSS/geomagnetism-accuracy-evaluation process, the controller 140-4 checks whether or not a GNSS accuracy or a geomagnetism accuracy is high (step S6022). If the GNSS accuracy or the geomagnetism accuracy is high (step S6022/YES), the controller 140-4 uses an azimuth based on GNSS or geomagnetic positioning (step S6024). If the GNSS accuracy or the geomagnetism accuracy is not high (step S6022/NO), the controller 140-4 uses an azimuth based on the measurement of the inertial measurement unit 20 (step S6026).

It is to be noted that the azimuth determined to be used in step S6024 or step S6026 may be outputted to any output device.

If the drone 10-4 has only a gyrocompass, the process skips step S6020, step S6022, and step S6024, and proceeds to step S6026.

(IMU-Rotation-Control Process)

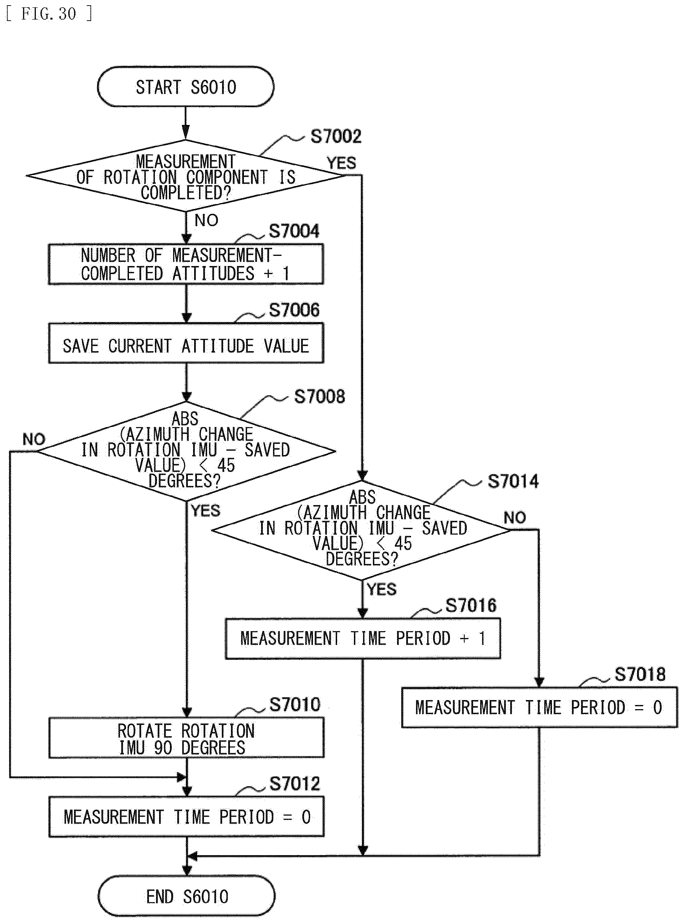

Referring now to FIG. 30, the IMU-rotation-control process according to the fourth embodiment will be described in detail. FIG. 30 is a flowchart illustrating the IMU-rotation-control process according to the fourth embodiment of the present disclosure.

As illustrated in FIG. 30, first, the controller 140-4 checks whether or not measurement of the rotation component is completed (step S7002). As an example, the controller 140-4 determines whether or not a predetermined measurement time period (e.g., 100 seconds) has elapsed since the start of the measurement.

If the estimation of the rotation component is completed (step S7002/YES), the controller 140-4 adds 1 to the number of measurement-completed attitudes (step S7004). The controller 140-4 then saves the measured attitude as a current attitude value (step S7006).

The controller 140-4 then checks whether or not the absolute value of "the azimuth change in the rotation IMU - the saved value" is less than 45 degrees (step S7008). If it is not less than 45 degrees (step S7008/NO), the controller 140-4 sets the measurement time period to 0 (step S7012), and ends the IMU-rotation-control process.

If it is less than 45 degrees (step S7008/YES), the controller 140-4 rotates the rotation IMU 90 degrees (step S7010). The controller 140-4 then sets the measurement time period to 0 (step S7012), and ends the IMU-rotation-control process.

If the estimation of the rotation component is not completed (step S7002/NO), the controller 140-4 checks whether or not the absolute value of "the azimuth change in the rotation IMU - the saved value" is less than 45 degrees (step S7014). If it is less than 45 degrees (step S7014/YES), the controller 140-4 adds 1 to the measurement time period (step S7016), and ends the IMU-rotation-control process.

If it is not less than 45 degrees (step S7014/NO), the controller 140-4 sets the measurement time period to 0 (step S7018), and ends the IMU-rotation-control process.

(GNSS/Geomagnetism-Accuracy-Evaluation Process)

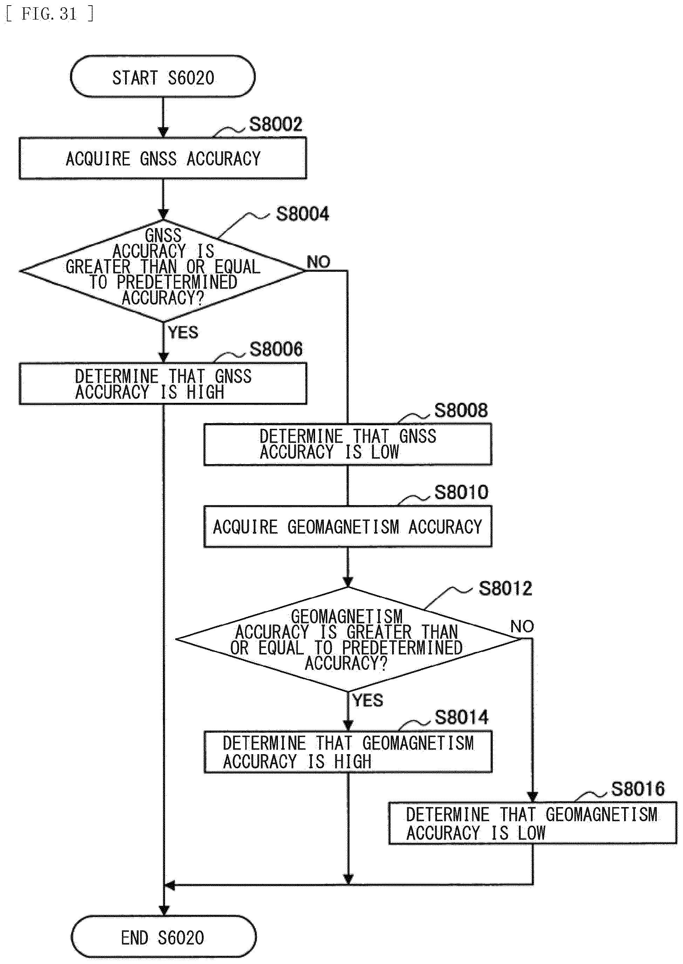

Referring now to FIG. 31, the GNSS/geomagnetism-accuracy-evaluation process according to the fourth embodiment will be described in detail. FIG. 31 is a flowchart illustrating the GNSS/geomagnetism-accuracy-evaluation process according to the fourth embodiment of the present disclosure.

As illustrated in FIG. 31, first, the controller 140-4 acquires the GNSS accuracy (step S8002). The controller 140-4 then checks whether or not the GNSS accuracy is greater than or equal to a predetermined accuracy (step S8004).

If the GNSS accuracy is greater than or equal to the predetermined accuracy (step S8004/YES), the controller 140-4 determines that the GNSS accuracy is high (step S8006), and ends the GNSS/geomagnetism-accuracy-evaluation process.

If the GNSS accuracy is not greater than or equal to the predetermined accuracy (step S8004/NO), the controller 140-4 determines that the GNSS accuracy is low (step S8008). Then, the controller 140-4 acquires the geomagnetism accuracy (step S8010). Subsequently, the controller 140-4 checks whether or not the geomagnetism accuracy is greater than or equal to a predetermined accuracy (step S8012). As an example of a method of evaluating the geomagnetism accuracy, there is given a method of evaluating an environmental magnetic noise from dispersed geomagnetic absolute values in a predetermined time period (e.g., 10 seconds). It is to be noted that the method of evaluating the geomagnetism accuracy are not limited thereto.

If the geomagnetism accuracy is greater than or equal to the predetermined accuracy (step S8012/YES), the controller 140-4 determines that the geomagnetism accuracy is high (step S8014), and ends the GNSS/geomagnetism-accuracy-evaluation process.

If the GNSS accuracy is not greater than or equal to the predetermined accuracy (step S8012/NO), the controller 140-4 determines that the GNSS accuracy is low (step S8016), and ends the GNSS/geomagnetism-accuracy-evaluation process.

The fourth embodiment of the present disclosure has been described above by referring to FIGS. 24 and 26 to 31. Subsequently, a fifth embodiment of the present disclosure will be described.

<1.6. Fifth Embodiment>

In the above-described embodiments, only the inertial measurement unit 20 is provided to the rotation mechanism. In the fifth embodiment, examples in which the inertial measurement unit 20 is also provided to a rotation mechanism in which an imaging device is provided will be described. Hereinafter, examples in which a camera is provided as the imaging device will be described. Further, in the following, descriptions of points overlapping with the first to fourth embodiments will be omitted as appropriate.

In recent drones, there are many products on which cameras with rotation mechanisms are mounted. It is costly to install a new rotation mechanism for the inertial measurement unit 20 in a drone on which a rotation mechanism for a camera is mounted. Accordingly, in the fifth embodiment, the inertial measurement unit 20 is provided to an existing rotation mechanism for a camera. With such a configuration, it is unnecessary to newly provide a rotation mechanism for the inertial measurement unit 20 in the drone, so that costs can be reduced. In addition, the inertial measurement unit 20 may be provided to products that are already in widespread use. It is to be noted that, in the following, an example will be described in which the inertial measurement unit 20 is provided at a position at which the attitude changes similarly to the change in the attitude of the camera, in accordance with the operation of the rotation mechanism that changes the attitude of the camera depending on the direction in which the camera performs imaging.

<1.6.1. Functional Configuration Example>

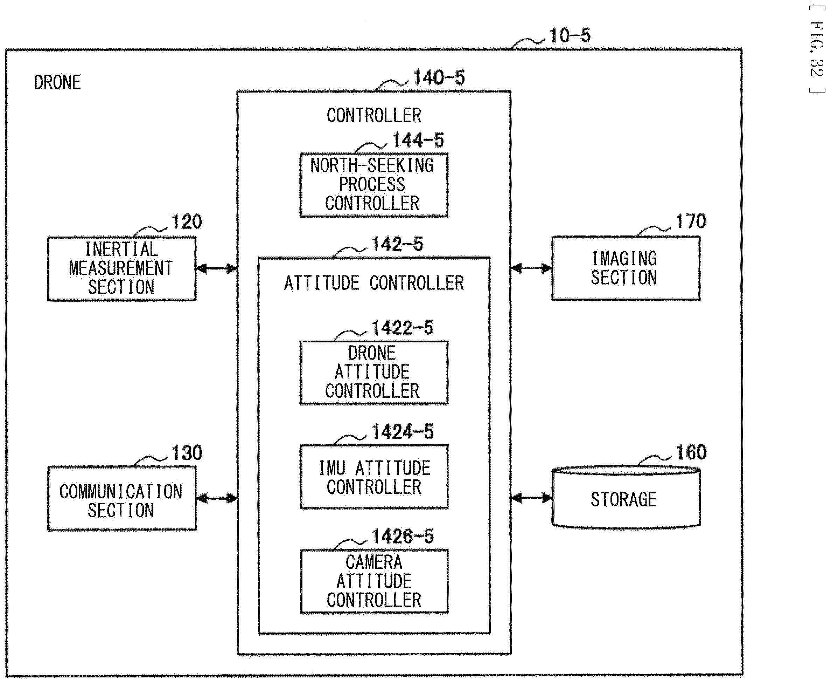

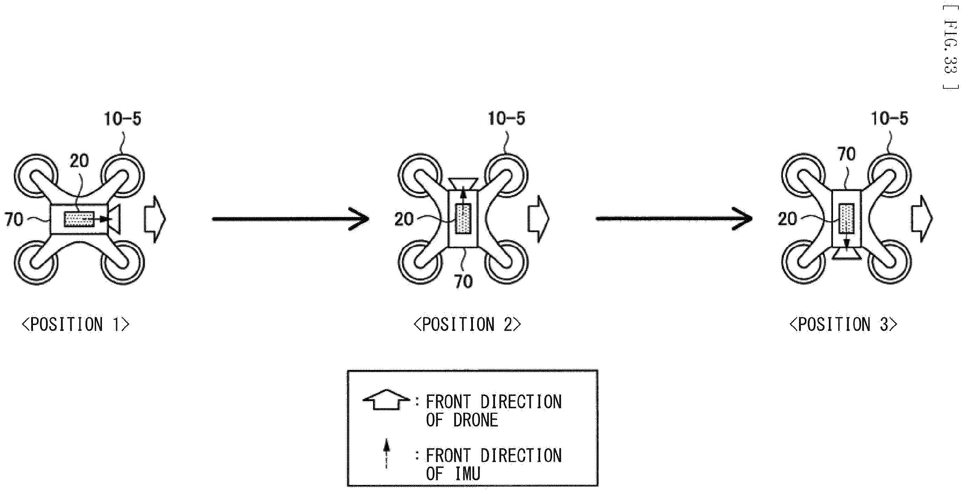

Hereinafter, referring to FIGs. 32 and 33, a functional configuration example of an information processing apparatus according to the fifth embodiment of the present disclosure will be described. FIG. 32 is a block diagram illustrating a functional configuration example of the information processing apparatus according to the fifth embodiment of the present disclosure.

As illustrated in FIG. 32, a drone 10-5 according to the fifth embodiment of the present disclosure includes the inertial measurement section 120, the communication section 130, a controller 140-5, the storage 160, and an imaging section 170.

(1) Inertial Measurement Section 120

The functions of the inertial measurement section 120 are the same as those described in <1.2.1. Functional Configuration Example>, and hence, the description in this chapter will be omitted.

(2) Communication Section 130

The functions of the communication section 130 are the same as those described in <1.2.1. Functional Configuration Example>, and hence, the description in this chapter will be omitted.

(3) Controller 140-5

Functions of the controller 140-5 differ in part from the functions described in <1.5.1. Functional Configuration Example>.

(3-1) Attitude Controller 142-5

Among the functions of the attitude controller 142-5, the function of controlling the attitude of the inertial measurement unit 20 and the attitude of the drone 10-5 is the same as the function described in the above embodiments, but a function of controlling the attitude of the camera differs in part from the function described in the above embodiments. In order to achieve the function, the attitude controller 142-5 includes a drone attitude controller 1422-5, an IMU attitude controller 1424-5, and a camera attitude controller 1426-5, as illustrated in FIG. 32.

(3-1-1) Drone Attitude Controller 1422-5

The functions of the drone attitude controller 1422-5 are the same as those of the drone attitude controller 1422-4 described in the above embodiment, and hence, the description thereof is omitted in this chapter.

(3-1-2) IMU Attitude Controller 1424-5

The functions of the IMU attitude controller 1424-5 differ in part from the functions of the IMU attitude controller 1424-4 described in the above-described embodiment. In this embodiment, the inertial measurement unit 20 is also provided to the rotation mechanism to which the camera is provided. Accordingly, if the rotation mechanism is controlled preferentially in the measurement process by the inertial measurement unit 20, there is a possibility that imaging by the camera is not performed properly. Thus, the IMU attitude controller 1424-5 controls the operation of the rotation mechanism depending on the process to be prioritized. For example, in a case where the measurement process by the inertial measurement unit 20 is prioritized, the IMU attitude controller 1424-5 rotates the rotation mechanism depending on the direction in which the inertial measurement unit 20 performs the measurement. In the present embodiment, the measurement process by the inertial measurement unit 20 to be prioritized is, for example, the measurement for the calibration process. With such a configuration, the IMU attitude controller 1424-5 is able to perform the measurement process without hindering the imaging process by the camera.

(3-1-3) Camera Attitude Controller 1426-5

The camera attitude controller 1426-5 has a function of controlling the attitude of the camera. For example, the camera attitude controller 1426-5 controls an operation of a mechanism that changes the attitude of the camera provided to the drone 10-5. In the present embodiment, the camera attitude controller 1426-5 changes the attitude of the camera provided to the rotation mechanism by rotating the rotation mechanism. However, in the present embodiment, not only the camera but also the inertial measurement unit 20 is provided to the rotation mechanism. For this reason, if the rotation mechanism is controlled preferentially for the imaging by the camera, there is a possibility that the measurement by the inertial measurement unit 20 is not performed properly. Accordingly, the camera attitude controller 1426-5 controls the operation of the rotation mechanism in accordance with the prioritized process. For example, if the imaging process by the camera is prioritized, the camera attitude controller 1426-5 rotates the rotation mechanism depending on the direction in which the camera performs imaging. In the present embodiment, the imaging process of the camera is prioritized except when the measurement device of the inertial measurement unit 20 is prioritized. With such a configuration, the camera attitude controller 1426-5 is able to perform the imaging process without being obstructed by the inertial measurement unit 20.

Referring now to FIG. 33, an exemplary control of the attitudes of the inertial measurement unit 20 and the camera by the attitude controller 142-5 will be described. FIG. 33 is an explanatory diagram illustrating an example of controlling the attitudes of the inertial measurement unit and the camera according to the fifth embodiment of the present disclosure. In FIG. 33, as an example, it is assumed that the measurement process by the inertial measurement unit 20 is given priority while the drone 10-5 travels from the position 1 to the position 2, and the imaging process by a camera 70 is given priority while the drone 10-5 travels from the position 2 to the position 3.

As illustrated in FIG. 33, the drone 10-5 is provided with the inertial measurement unit 20 and the camera 70. At the position 1, the front direction of the drone 10-5 coincides with the front direction of the inertial measurement unit 20. While the drone 10-5 travels from the position 1 to the position 2, since the measurement process by the inertial measurement unit 20 is prioritized, the IMU attitude controller 1424-5 rotates the rotation mechanism in a direction corresponding to the measurement process.

Subsequently, since the imaging process by the camera 70 is prioritized while the drone 10-5 travels from the position 2 to the position 3, the camera attitude controller 1426-5 rotates the rotation mechanism in a direction corresponding to the imaging process.

It is to be noted that, in a case where the measurement process by the inertial measurement unit 20 is prioritized, a time period in which the measurement process is prioritized may be set. For example, the time period in which the measurement process is prioritized may be set to a time period in which the rotation measurement is completed in any one direction (e.g., 100 seconds). After the set time period has elapsed, the controller 140-5 switches the prioritized process from the measurement process to the imaging process.

(3-2) North-Seeking Process Controller 144-5

The functions of the north-seeking process controller 144-5 are the same as those described in the above-described embodiments, and hence, the description in this chapter will be omitted.

(4) Storage 160

The functions of the storage 160 are the same as those described in <1.2.1. Functional Configuration Example>, and hence, the description in this chapter will be omitted.

The functional configuration example of the information processing apparatus according to the fifth embodiment of the present disclosure has been described above by referring to FIGs. 32 and 33. Subsequently, an operation example of the information processing apparatus according to the fifth embodiment of the present disclosure will be described.

<1.6.2. Operation Example>

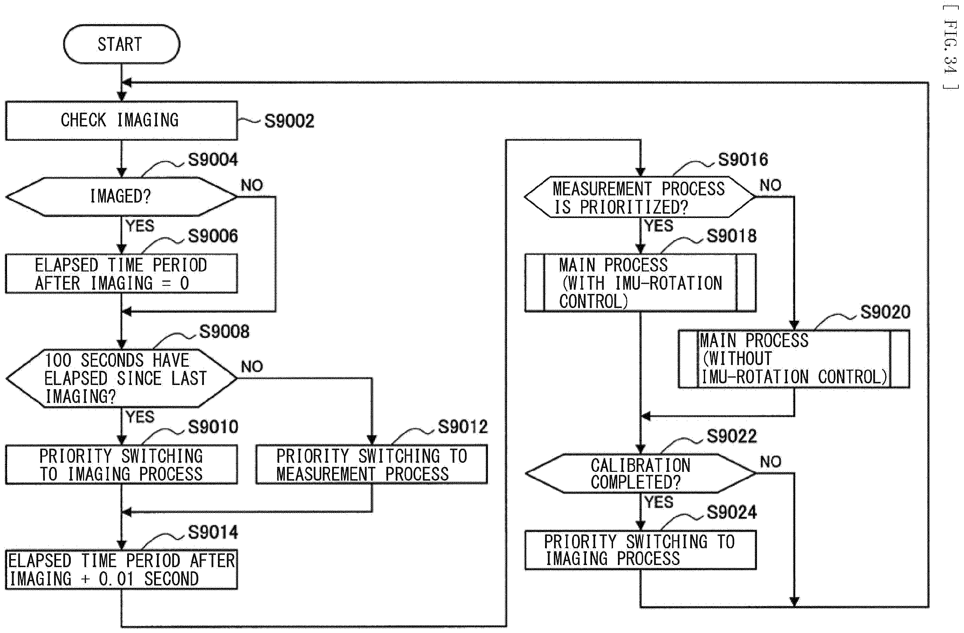

An operation example according to the fifth embodiment differs in part from the operation examples according to the embodiments described above. Hereinafter, referring to FIG. 34, the operation example of the information processing apparatus according to the fifth embodiment of the present disclosure will be described. FIG. 34 is a flowchart illustrating a selection process of a main process according to the fifth embodiment of the present disclosure.

(Selection Process of Main Process)

As illustrated in FIG. 34, first, the controller 140-5 checks whether or not the camera 70 has captured an image (step S9002). In a case where the camera 70 has captured an image (step S9004/YES), the controller 140-5 sets an elapsed time period after the imaging to 0 (step S9006).

The controller 140-5 then checks whether or not 100 seconds have elapsed since the last imaging (step S9008). In a case where 100 seconds have elapsed (step S9008/NO), the controller 140-5 switches the prioritized process to the imaging process by the camera 70 (step S9010). In contrast, in a case where 100 seconds have not elapsed, the controller 140-5 switches the prioritized process to the measurement process by the inertial measurement unit 20 (step S9012).

After the switching of the prioritized process, the controller 140-5 adds 0.01 second to the elapsed time period after the imaging (step S9014). The controller 140-5 then checks whether or not the measurement device by the inertial measurement unit 20 is prioritized (step S9016).

In a case where the measurement process is prioritized (step S9016/YES), the controller 140-5 executes the main process (with IMU-rotation control) (step S9018). In contrast, in a case where the measurement process is not prioritized (step S9016/NO), the controller 140-5 executes the main process (without IMU-rotation control) (step S9020).

In the main process (with IMU-rotation control), all steps in the main process described referring to FIG. 29 are executed. In contrast, in the main process (without IMU-rotation control), all steps other than the IMU-rotation-control process of step S6010 in the main process described referring to FIG. 29 are executed. It is to be noted that, in step S6016, an absolute azimuth of the camera 70 is calculated instead of the absolute azimuth of the rotation IMU. Further, in step S6018, the airframe absolute azimuth is calculated by the following Equation (9) or Equation (10) using a camera absolute azimuth and a camera azimuth change instead of the IMU absolute azimuth and the IMU azimuth change. Since the camera absolute azimuth is the same as the IMU absolute azimuth, the camera absolute azimuth is also calculated by calculating the IMU absolute azimuth.

[Math. 9]

$$\text{Airframe absolute azimuth} = \text{camera absolute azimuth} + (\text{airframe azimuth change} - \text{camera azimuth change}) \quad \dots (9)$$

[Math. 10]

$$\text{Airframe absolute azimuth} = \text{camera absolute azimuth} - \text{rotation amount of rotation mechanism} \quad \dots (10)$$

After executing the main process, the controller 140-5 checks whether or not the calibration process is completed (step S9022). In a case where the calibration process is completed (step S9022/YES), the controller 140-5 switches the process to be prioritized to the imaging process (step S9024), and executes step S9002 process again. In contrast, in a case where the calibration process is not completed (step S9022/NO), the controller 140-5 executes step S9002 again.

The fifth embodiment of the present disclosure has been described above by referring to FIGs. 32 to 34. Subsequently, modification examples according to embodiments of the present disclosure will be described.

«2. Modification Examples»

In the following, modification examples of the embodiments of the present disclosure will be described. It is to be noted that the modification examples described below may be applied to the embodiments of the present disclosure alone or in combinations thereof. Further, the modification examples may be applied instead of the configuration described in the embodiments of the present disclosure, or may be additionally applied to the configuration described in the embodiments of the present disclosure.

(1) First Modification Example

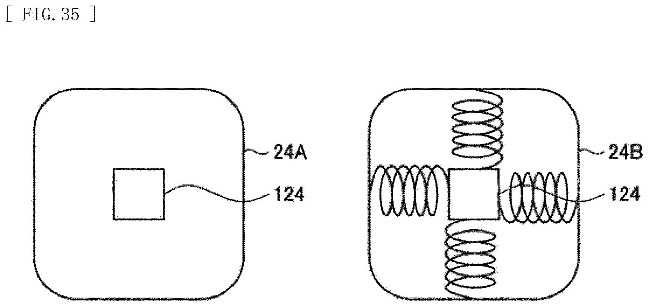

Hereinafter, referring to FIG. 35, a first modification example according to an embodiment of the present the present disclosure will be described. FIG. 35 is an explanatory diagram illustrating the first modification example according to an embodiment of the present disclosure. It is to be noted that a diagram illustrated on the left side of FIG. 35 is a diagram indicating an inertial measurement unit having no correction mechanism, and a diagram illustrated on the right side is a diagram indicating an inertial measurement unit having a correction mechanism.

In the embodiments described above, an example has been described in which the inertial measurement section 120 uses only an inertial measurement unit 24A having no correcting mechanism illustrated in the left side of FIG. 35. In the first modification example, an example will be described in which the inertial measurement section 120 also uses an inertial measurement unit 24B having the correction mechanism, which is indicated in the right side of FIG. 20.

As described in the above embodiments, it is possible to determine the attitude of the mobile object on the basis of the gravity vector calculated by the average of accelerations. However, noises due to acceleration are included in the angular velocity measured by the inertial measurement unit 24, and an error occurs in the attitude of the mobile object. As a result, the accuracy of detecting the azimuth by the controller 140 is lowered. Accordingly, as in the inertial measurement unit 24B illustrated on the right side of FIG. 35, by providing a sensor 124 to the inertial measurement unit 24B via the correction mechanism including an elastic member, the noises due to acceleration contained in the angular velocity is reduced.

As described above, the controller 140 is able to detect the azimuth while the mobile object is traveling with higher accuracy by reducing noises included in the angular velocity owing to the correction mechanism of the inertial measurement unit 24.

(2) Second Modification Example

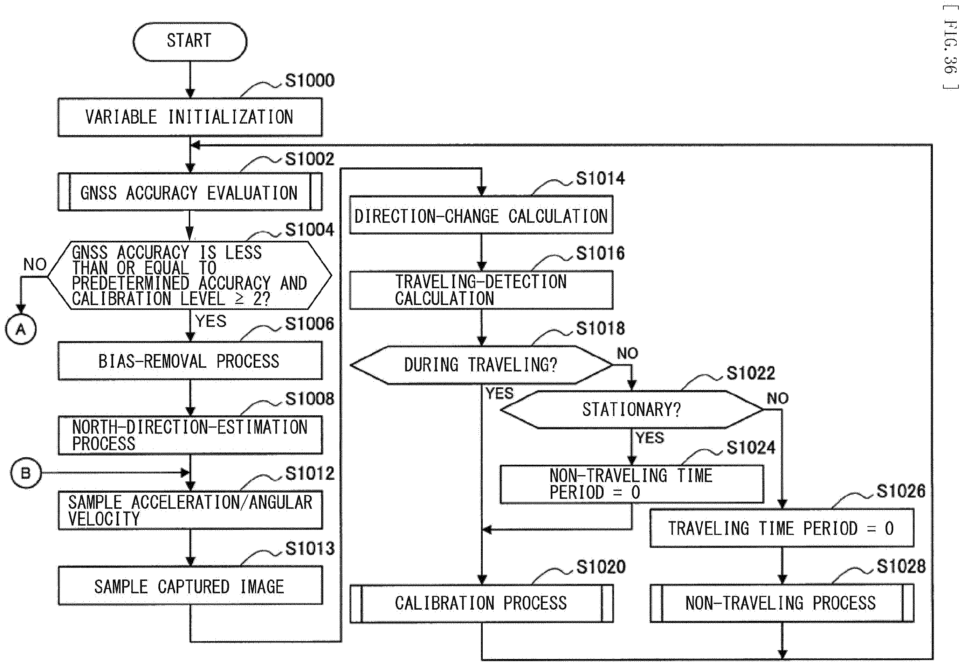

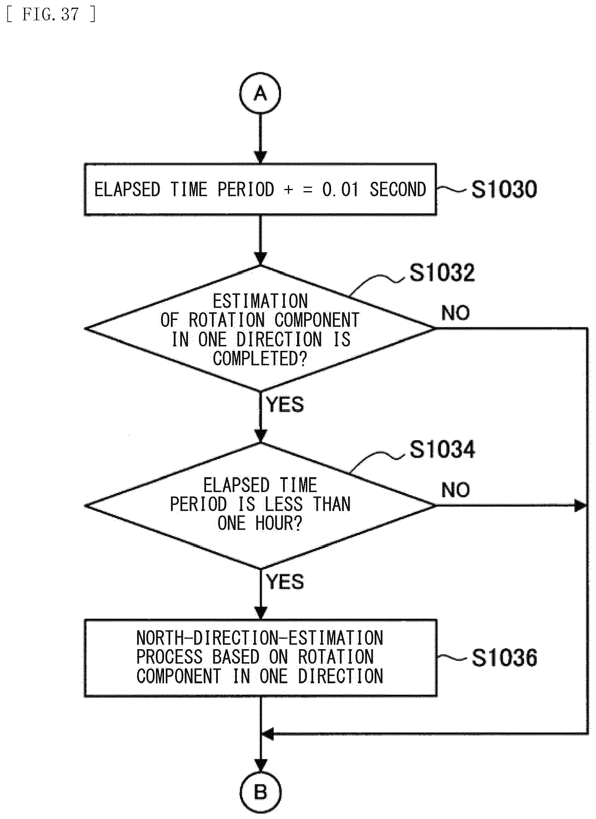

Hereinafter, referring to FIGs. 36 and 37, a sixth modification example according to embodiments of the present disclosure will be described. FIG. 36 and FIG. 37 are each an explanatory diagram illustrating the sixth modification example according to embodiments of the present disclosure. A flowchart illustrated in FIG. 36 is a flowchart in which a process related to determination of a predetermined condition is added to the main process according to the above-described embodiments. FIG. 37 is a flowchart illustrating a process including the determination of the predetermined condition.

In the above embodiment, the example in which the north-seeking process is performed on the basis of two pieces of information measured in two different directions including at least the direction of when the mobile object is traveling. In a case where the predetermined condition is satisfied, the north-seeking process may be performed on the basis of one piece of information to be measured in one direction.

The predetermined condition is, for example, whether or not an azimuth error caused by a bias can be accepted. If acceptable, the controller 140 does not have to perform the bias-removal process, so that it is possible to perform the north-seeking process on the basis of one piece of information to be measured in one direction. In contrast, if the azimuth error caused by the bias is not acceptable, since the controller 140 has to perform the bias-removal process, the north-seeking process is performed after performing the bias-removal process on the basis of two pieces of information to be measured in two different directions.

The determination as to whether or not the azimuth error caused by the bias is acceptable is made, for example, on the basis of whether or not the elapsed time period from the last bias estimation is within a predetermined time period. For example, the predetermined time period is one hour. It is to be noted that the predetermined time period is not limited to such an example. If the elapsed time period since the last bias estimation is within the predetermined time period, the controller 140 may perform the north-seeking process on the basis of one piece of information to be measured in one direction.

The determination as to whether or not the azimuth error caused by the bias is acceptable may be made, for example, on the basis of whether or not the worst performance of the gyro sensor is ensured. Whether or not the worst performance of the gyro sensor is ensured is, for example, whether or not a bias value at which the azimuth error becomes an acceptable value is maintained all the time after the products are shipped, when the azimuth error is defined by atan (bias/rotation (15dph)). For example, if the acceptable value of the azimuth error is 1 degree, the bias value at which the azimuth error becomes the acceptable value is about 0.2 dph. If the worst performance of the gyro sensor is ensured, the controller 140 may perform the north-seeking process on the basis of one piece of information to be measured in one direction.

Here, a process including determination of the predetermined condition will be described with reference to FIGS. 36 and 37. As illustrated in FIGs. 36 and 37, in a case where the GNSS accuracy is less than or equal to the predetermined accuracy and the calibration level is not greater than or equal to 2 (step S1004/NO), the process related to the determination of the predetermined condition illustrated in FIG. 37 is performed. In the processes illustrated in FIGs. 36 and 37, it is assumed that the determination as to whether or not the azimuth error caused by the bias is acceptable is performed on the basis of whether or not the elapsed time period from the last bias estimation is less than one hour. Further, a sampling interval of inertial data by the inertial measurement unit is assumed to be 0.01 second.

In the process including the predetermined condition, the controller 140 first adds 0.01 second, which is the sampling interval, to the elapsed time period (step S1030). The controller 140 then checks whether or not estimation of the rotation component in one direction is completed (step S1032).

If the estimation of the rotation component in one direction is completed (step S1032/YES), the controller 140 checks whether or not the elapsed time period is less than one hour (step S1034). If the elapsed time period is less than one hour (step S1034/YES), the controller 140 performs the north-direction-estimation process based on the rotation component in one direction (step S1036). After the north-direction-estimation process, the controller 140 samples an acceleration and an angular velocity (step S1012).

If the estimation of the rotation component in one direction is not completed (step S1032/NO), the controller 140 samples an acceleration and an angular velocity without performing the north-direction-estimation process (step S1012).

If the elapsed time is not less than one hour (step S1034/NO), the controller 140 samples an acceleration and an angular velocity without performing the north-direction-estimation process (step S1012).

The steps other than the above-described steps S1030 to S1036 may be similar to the main process described in <1.2.2. Operation Example>. Therefore, the descriptions of the steps other than steps S1030 to S1036 are omitted.

It is to be noted that the elapsed time period may be reset to 0 second when the calibration process in one direction is completed. For example, the controller 140 resets the elapsed time period to 0 second between step S3004 and step S3006 in flowchart of the calibration process illustrated in FIG. 14.

The modification examples according to embodiments of the present disclosure have been described above referring to FIGs. 35 to 37. Next, a hardware configuration of an information processing apparatus according to an embodiment of the present the present disclosure will be described.

«3. Hardware Configuration Example»

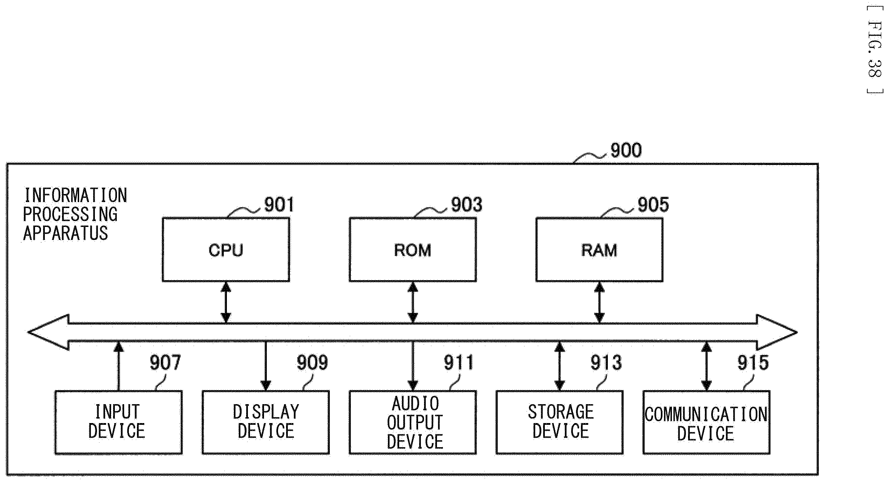

Referring to FIG. 38, a hardware configuration example of an information processing apparatus according to an embodiment of the present disclosure will be described below. FIG. 38 is a block diagram illustrating an example of a hardware configuration of an information processing apparatus 900 according to an embodiment of the present disclosure. As illustrated in FIG. 38, the information processing apparatus 900 includes, for example, a CPU 901, a ROM 903, a RAM 905, an input device 907, a display device 909, an audio output device 911, a storage device 913, and a communication device 915. It is to be noted that the hardware configuration indicated here is one example and some of the constituent elements may be omitted. Alternatively, the hardware configuration may further include other constituent elements than those indicated here.

(CPU 901, ROM 903, and RAM 905)

The CPU 901 functions as an arithmetic processing device or a control device, for example, and controls all or part of the operations of various constituent elements on the basis of various programs recorded in the ROM 903, the RAM 905, or the storage device 913. The ROM 903 is a means of storing programs to be read into the CPU 901, and data or the like used for computation. The RAM 905 temporarily or permanently stores, for example, programs read into the CPU 901, and various parameters and the like that change appropriately when the programs are executed. These are mutually coupled via a host bus that includes a CPU bus or the like. The CPU 901, the ROM 903, and the RAM 905 may achieve the functions of the controller 140 described with reference to FIG. 4, FIG. 16, FIG. 24, and FIG. 32 by cooperation with software, for example.

(Input Device 907)

Examples of the input device 907 include a mouse, a keyboard, a touchscreen, a button, a switch, a lever, and the like. Further, a remote controller that is able to transmit control signals using infrared or other electromagnetic waves may also be used as the input device 907. The input device 907 also includes an audio input device such as a microphone.

(Display Device 909 and Audio Output Device 911)

The display device 909 includes display devices such as, for example, a CRT (Cathode Ray Tube) display device and a liquid crystal display (LCD) device. The display device 109 also includes display devices such as a projector device, an OLED (Organic Light Emitting Diode) device, and a lamp. Moreover, the audio output device 911 includes an audio output device such as a speaker or a headphone.

(Storage Device 913)

The storage device 913 is a device for storing various types of data. For the storage device 113, for example, a magnetic memory device such as a hard disk drive (HDD), a semiconductor memory device, an optical memory device, a magneto-optical memory device, and the like are used. The storage device 913 may achieve the functions of the storage 160, for example, described with reference to FIG. 4, FIG. 16, FIG. 24, and FIG. 32.

(Communication Device 915)

The communication device 915 is a communication device for establishing a connection with a network such as, for example, a wired or wireless LAN, Bluetooth (registered trademark), a communication card for WUSB (Wireless USB), a router for optical communications, a router for ADSL (Asymmetric Digital Subscriber Line), and modems and the like for various communications.

A hardware configuration example of the information processing apparatus according to an embodiment of the present disclosure has been described above with reference to FIG. 38.

«4. Conclusion»

As described above, the information processing apparatus according to an embodiment of the present disclosure performs the north-seeking process on the basis of, among pieces of information related to the mobile object that the inertial measurement unit measures, two pieces of information to be measured in two different directions including at least the direction of when the mobile object is traveling.

The information processing apparatus removes the error caused by the traveling of the mobile object on the basis of two pieces of information to be measured in two different directions including at least the direction of when the mobile object is traveling, and is able to perform the north-seeking process while the mobile object is traveling.

Accordingly, it is possible to provide an information processing apparatus, an information processing method, and a program that are novel and improved, and are able to more accurately detect an azimuth during traveling of a mobile object.

Preferred embodiments of the present disclosure have been described above in detail with reference to the accompanying drawings, but the technical scope of the present disclosure is not limited to such embodiments. It is apparent that a person having ordinary skill in the art of the present disclosure can arrive at various alterations and modifications within the scope of the technical idea described in the appended claims, and it is understood that such alterations and modifications naturally fall within the technical scope of the present disclosure.

The series of processes performed by various devices and units described herein may be achieved by any of software, hardware, and a combination of software and hardware. Programs included in the software are preliminarily stored in respective internal units of the devices or recording media (non-transitory media) provided outside. Additionally, each program is read into a RAM when it is to be executed by a computer, for example, and executed by a processor such as a CPU.

Moreover, the processes described herein with reference to the flowcharts and the sequence diagrams are not necessarily processed in the illustrated order. For example, some of the process steps may be processed in parallel. Also, additional process steps may be adopted, or some of the process steps may be omitted.

Further, the effects described herein are merely illustrative and exemplary, and not limiting. That is, the technique according to the present disclosure can exert other effects that are apparent to those skilled in the art from the description herein, in addition to the above-described effects or in place of the above-described effects.

It is to be noted that the following configurations also belong to the technical scope of the present disclosure.

(1) An information processing apparatus including
a north-seeking process controller that performs a north-seeking process on a basis of, among pieces of information related to a mobile object, at least two pieces of information, in which
orientations of the mobile object at respective timings when the at least two pieces of information are measured by an inertial measurement unit are different from each other, and
at least one of the at least two pieces of information measured by the inertial measurement unit is measured while the mobile object is traveling.

(2) The information processing apparatus according to claim 1, further including
an attitude controller that controls an attitude of the inertial measurement unit, in which
the attitude controller controls the attitude of the inertial measurement unit to cause orientations of the inertial measurement unit at respective timings when the inertial measurement unit measures the at least two pieces of information to be different from each other.

(3) The information processing apparatus according to (2), in which the attitude controller determines whether or not to change the attitude of the inertial measurement unit depending on whether or not an attitude of the mobile object has changed before a predetermined time period elapses from a time at which a first piece of information is acquired out of the at least two pieces of information.

(4) The information processing apparatus according to (3), in which,
in a case where the attitude of the mobile object has changed before the first time period elapses from the time at which the first piece of information is acquired, the attitude controller does not change the attitude of the inertial measurement unit, and,
in a case where the attitude of the mobile object has not changed before the first time period elapses from the time at which the first piece of information is acquired, the attitude controller changes the attitude of the inertial measurement unit.

(5) The information processing apparatus according to (4), in which, in a case where the attitude of the mobile object has changed before a second time period elapses from a time at which the attitude of the inertial measurement unit is changed, the attitude controller further changes the attitude of the inertial measurement unit.

(6) The information processing apparatus according to any one of (2) to (5), in which, in a case where the inertial measurement unit is provided at a position at which the attitude changes similarly to a change in the attitude of the imaging device, in accordance with an operation of a rotation mechanism that changes the attitude of the imaging device depending on a direction in which the imaging device performs imaging, the attitude controller controls the operation of the rotation mechanism depending on a process to be prioritized.

(7) The information processing apparatus according to (6), in which, in a case where an imaging process by the imaging device is prioritized, the attitude controller rotates the rotation mechanism depending on a direction in which the imaging device performs imaging.

(8) The information processing apparatus according to (6), in which, in a case where a measurement process by the inertial measurement unit is prioritized, the attitude controller rotates the rotation mechanism depending on a direction in which the inertial measurement unit performs measurement.

(9) The information processing apparatus according to (1), in which the north-seeking process controller estimates a north direction on a basis of a rotation component obtained by removing, from the information, a motion component indicating an amount of change in an attitude of the mobile object.

(10) The information processing apparatus according to (9), in which the north-seeking process controller acquires a first attitude of the mobile object to be calculated on a basis of an angular velocity of the mobile object to be measured by the inertial measurement unit, and acquires, as the motion component, an angular velocity to be calculated on a basis of a second attitude of the mobile object to be obtained by correcting the first attitude using a traveling speed of the mobile object as a reference.

(11) The information processing apparatus according to (9), in which the north-seeking process controller acquires a first attitude of the mobile object to be calculated on a basis of an angular velocity of the mobile object to be measured by the inertial measurement unit and a second attitude of the mobile object to be calculated on a basis of an acceleration of the mobile object, and acquires, as the motion component, an angular velocity to be calculated on a basis of a difference between the first attitude and the second attitude.

(12) The information processing apparatus according to (9), in which the north-seeking process controller estimates the north direction on a basis of a rotation component to be obtained by further removing a bias of the inertial measurement unit from the rotation component, on a basis of the at least two pieces of information.

(13) The information processing apparatus according to (12), in which the north-seeking process controller acquires the bias on a basis of at least two of the pieces of information each from which the motion component has been removed and in which the orientations of the mobile object at respective timings when measured by the inertial measurement unit are different from each other, and on a basis of a latitude at a position of the mobile object.

(14) The information processing apparatus according to any one of (1) to (13), in which the information is measured by the inertial measurement unit when the mobile object is traveling or stationary in a direction within a predetermined range for a predetermined time period.

(15) The information processing apparatus according to (14), in which the information is calculated on a basis of a statistical process performed on a plurality of pieces of information measured within the predetermined time period.

(16) The information processing apparatus according to any one of (1) to (15), in which one of the two pieces of information is the information to be measured while the mobile object is stationary.

(17) The information processing apparatus according to any one of (9) to (16), in which the north-seeking process controller starts the north-seeking process in a case where the pieces of information are measured while the mobile object is traveling or stationary for a predetermined time period, in the respective two orientations that are different from each other by a predetermined angle or more.

(18) The information processing apparatus according to (17), in which the north-seeking process controller starts the north-seeking process in a case where a sum of differences of the pieces of information is greater than or equal to a predetermined threshold.

(19) An information processing method executed by a processor, the method including:

performing a north-seeking process on a basis of, among pieces of information related to a mobile object, at least two pieces of information;
causing orientations of the mobile object at respective timings when the at least two pieces of information are measured by an inertial measurement unit to be different from each other; and
causing at least one of the at least two pieces of information measured by the inertial measurement unit to be measured while the mobile object is traveling.

(20) A program for causing a computer to function as
a north-seeking process controller that performs a north-seeking process on a basis of, among pieces of information related to a mobile object, at least two pieces of information, in which
orientations of the mobile object at respective timings when the at least two pieces of information are measured by an inertial measurement unit are different from each other, and
at least one of the at least two pieces of information measured by the inertial measurement unit is measured while the mobile object is traveling.

Reference Signs List

| | |
|---|---|
| 10 | drone |
| 20 | inertial measurement unit |
| 70 | camera |
| 110 | attitude information acquisition section |
| 120 | inertial measurement section |

| 130 | communication section |
|---|---|
| 140 | controller |
| 142 | attitude controller |
| 144 | north-seeking process controller |
| 160 | storage |
| 170 | imaging section |
| 1442 | drone attitude controller |
| 1444 | IMU attitude controller |
| 1446 | camera attitude controller |

**Claims**

1.  An information processing apparatus comprising
    a north-seeking process controller that performs a north-seeking process on a basis of, among pieces of information related to a mobile object, at least two pieces of information, wherein
    orientations of the mobile object at respective timings when the at least two pieces of information are measured by an inertial measurement unit are different from each other, and
    at least one of the at least two pieces of information measured by the inertial measurement unit is measured while the mobile object is traveling.

2.  The information processing apparatus according to claim 1, further comprising
    an attitude controller that controls an attitude of the inertial measurement unit, wherein
    the attitude controller controls the attitude of the inertial measurement unit to cause orientations of the inertial measurement unit at respective timings when the inertial measurement unit measures the at least two pieces of information to be different from each other.

3.  The information processing apparatus according to claim 2, wherein the attitude controller determines whether or not to change the attitude of the inertial measurement unit depending on whether or not an attitude of the mobile object has changed before a predetermined time period elapses from a time at which a first piece of information is acquired out of the at least two pieces of information.

4.  The information processing apparatus according to claim 3, wherein,
    in a case where the attitude of the mobile object has changed before the first time period elapses from the time at which the first piece of information is acquired, the attitude controller does not change the attitude of the inertial measurement unit, and,
    in a case where the attitude of the mobile object has not changed before the first time period elapses from the time at which the first piece of information is acquired, the attitude controller changes the attitude of the inertial measurement unit.

5.  The information processing apparatus according to claim 4, wherein, in a case where the attitude of the mobile object has changed before a second time period elapses from a time at which the attitude of the inertial measurement unit is changed, the attitude controller further changes the attitude of the inertial measurement unit.

6.  The information processing apparatus according to claim 2, wherein, in a case where the inertial measurement unit is provided at a position at which the attitude changes similarly to a change in the attitude of the imaging device, in accordance with an operation of a rotation mechanism that changes the attitude of the imaging device depending on a direction in which the imaging device performs imaging, the attitude controller controls the operation of the rotation mechanism depending on a process to be prioritized.

7.  The information processing apparatus according to claim 6, wherein, in a case where an imaging process by the imaging device is prioritized, the attitude controller rotates the rotation mechanism depending on a direction in which the imaging device performs imaging.

8.  The information processing apparatus according to claim 6, wherein, in a case where a measurement process by the inertial measurement unit is prioritized, the attitude controller rotates the rotation mechanism depending on a direction in which the inertial measurement unit performs measurement.

9.  The information processing apparatus according to claim 1, wherein the north-seeking process controller estimates a north direction on a basis of a rotation component obtained by removing, from the information, a motion component indicating an amount of change in an attitude of the mobile object.

10. The information processing apparatus according to claim 9, wherein the north-seeking process controller acquires a first attitude of the mobile object to be calculated on a basis of an angular velocity of the mobile object to be measured by the inertial measurement unit, and acquires, as the motion component, an angular velocity to be calculated on a basis of a second attitude of the mobile object to be obtained by correcting the first attitude using a traveling speed of the mobile object as a reference.

11. The information processing apparatus according to claim 9, wherein the north-seeking process controller acquires a first attitude of the mobile object to be calculated on a basis of an angular velocity of the mobile object to be measured by the inertial measurement unit and a second attitude of the mobile object to be calculated on a basis of an acceleration of the mobile object, and acquires, as the motion component, an angular velocity to be calculated on a basis of a difference between the first attitude and the second attitude.

12. The information processing apparatus according to claim 9, wherein the north-seeking process controller estimates the north direction on a basis of a rotation component to be obtained by further removing a bias of the inertial measurement unit from the rotation component, on a basis of the at least two pieces of information.

13. The information processing apparatus according to claim 12, wherein the north-seeking process controller acquires the bias on a basis of at least two of the pieces of information each from which the motion component has been removed and in which the orientations of the mobile object at respective timings when measured by the inertial measurement unit are different from each other, and on a basis of a latitude at a position of the mobile object.

14. The information processing apparatus according to claim 1, wherein the information is measured by the inertial measurement unit when the mobile object is traveling or stationary in a direction within a predetermined range for a predetermined time period.

15. The information processing apparatus according to claim 14, wherein the information is calculated on a basis of a statistical process performed on a plurality of pieces of information measured within the predetermined time period.

16. The information processing apparatus according to claim 1, wherein one of the two pieces of information is the information to be measured while the mobile object is stationary.

17. The information processing apparatus according to claim 9, wherein the north-seeking process controller starts the north-seeking process in a case where the pieces of information are measured while the mobile object is traveling or stationary for a predetermined time period, in the respective two orientations that are different from each other by a predetermined angle or more.

18. The information processing apparatus according to claim 17, wherein the north-seeking process controller starts the north-seeking process in a case where a sum of differences of the pieces of information is greater than or equal to a predetermined threshold.

19. An information processing method executed by a processor, the method comprising:

    performing a north-seeking process on a basis of, among pieces of information related to a mobile object, at least two pieces of information;
    causing orientations of the mobile object at respective timings when the at least two pieces of information are measured by an inertial measurement unit to be different from each other; and
    causing at least one of the at least two pieces of information measured by the inertial measurement unit to be measured while the mobile object is traveling.

20. A program for causing a computer to function as
    a north-seeking process controller that performs a north-seeking process on a basis of, among pieces of information related to a mobile object, at least two pieces of information, wherein
    orientations of the mobile object at respective timings when the at least two pieces of information are measured by an inertial measurement unit are different from each other, and

at least one of the at least two pieces of information measured by the inertial measurement unit is measured while the mobile object is traveling.

[ FIG. 1 ]

[ FIG. 2 ]

[ FIG. 3 ]

<POSITION 2>

<POSITION 3>

<POSITION 1>

| ⬆ | : FRONT DIRECTION OF DRONE |
| ↑ | : FRONT DIRECTION OF IMU |

[ FIG. 4 ]

[ FIG. 5 ]

ERROR DISTRIBUTION RANGE OF ONE SAMPLE

ERROR DISTRIBUTION RANGE OF 1 SECOND AVERAGE

ERROR DISTRIBUTION RANGE OF 10 SECONDS

ERROR DISTRIBUTION RANGE OF 100 SECONDS

ANGULAR VELOCITY X

ANGULAR VELOCITY Y

[ FIG. 6 ]

[ FIG. 7 ]

[ FIG. 8 ]

[ FIG. 9 ]

[ FIG. 10 ]

[ FIG. 11 ]

[ FIG. 12 ]

START → S1000

VARIABLE INITIALIZATION → S1002

GNSS ACCURACY EVALUATION → S1004

GNSS ACCURACY IS LESS THAN OR EQUAL TO PREDETERMINED ACCURACY AND CALIBRATION LEVEL ≥ 2? → S1006

NO →

YES ↓

BIAS-REMOVAL PROCESS → S1008

NORTH-DIRECTION-ESTIMATION PROCESS → S1012

SAMPLE ACCELERATION/ANGULAR VELOCITY ←

DIRECTION-CHANGE CALCULATION → S1014

TRAVELING-DETECTION CALCULATION → S1016

DURING TRAVELING? → S1018

YES →

NO ↓

STATIONARY? → S1022

YES →

NON-TRAVELING TIME PERIOD = 0 → S1024

NO ↓

TRAVELING TIME PERIOD = 0 → S1026

NON-TRAVELING PROCESS → S1028

CALIBRATION PROCESS → S1020

[ FIG. 13 ]

```
        ┌─────────────────────┐
        │    START  S1002     │
        └──────────┬──────────┘
                   │
                   ▼
    ┌──────────────────────────────┐
    │   ACQUIRE GNSS ACCURACY      │ ～ S2000
    └──────────────┬───────────────┘
                   │        ～ S2002
                   ▼
        ╱─────────────────────╲
       ╱  GNSS ACCURACY IS LESS ╲      NO
      ⟨   THAN OR EQUAL TO        ⟩─────────────────────┐
       ╲  PREDETERMINED ACCURACY?╱                      │
        ╲─────────────────────╱                         │
               │ YES                                     │
               │        ～ S2004                         │        ～ S2008
               ▼                                         ▼
    ┌──────────────────────────┐      ┌──────────────────────────┐
    │  DETERMINE THAT GNSS     │      │  DETERMINE THAT GNSS     │
    │  ACCURACY IS LOW         │      │  ACCURACY IS HIGH        │
    └────────────┬─────────────┘      └────────────┬─────────────┘
                 │       ～ S2006                   │      ～ S2010
                 ▼                                  ▼
 ┌────────────────────────────────┐  ┌────────────────────────────────┐
 │ DECIDE TO ESTIMATE AZIMUTH     │  │ DECIDE TO PERFORM AZIMUTH      │
 │ BASED ON MEASUREMENT PERFORMED │  │ ESTIMATION BASED ON GNSS       │
 │ BY INERTIAL MEASUREMENT UNIT   │  │ POSITIONING                    │
 └────────────┬───────────────────┘  └────────────┬───────────────────┘
              │                                    │
              │◄───────────────────────────────────┘
              ▼
    ┌─────────────────────┐
    │     END  S1002      │
    └─────────────────────┘
```

[ FIG. 14 ]

START S1020

S3000
DIRECTION-CHANGE AMOUNT IS WITHIN FIRST RANGE? — NO →

YES

S3002
MOTION-COMPONENT-REMOVAL PROCESS

S3004
TRAVELING/STATIONARY TIME PERIOD IS GREATER THAN OR EQUAL TO PREDETERMINED TIME PERIOD?

YES

S3006
CALIBRATION LEVEL + = 1

S3008
TRAVELING/STATIONARY TIME PERIOD = 0

S3010
ACQUIRE ACCELERATION/ANGULAR VELOCITY

S3012
DIRECTION-CHANGE CALCULATION

S3014
DIRECTION CHANGE AMOUNT IS MORE THAN OR EQUAL TO SECOND RANGE? — NO

YES

S3016
DIRECTION CHANGE = 0

S3018
TRAVELING/STATIONARY TIME PERIOD = 0

S3020
DIRECTION CHANGE = 0

S3022
TRAVELING/STATIONARY TIME PERIOD + = 1

END S1020

[ FIG. 15 ]

```
        ┌─────────────────────┐
        │    START S1028      │
        └─────────────────────┘
                  │
                  ▼
        ┌─────────────────────────────┐
        │ STATIONARY TIME PERIOD = 0  │────S4000
        └─────────────────────────────┘
                  │
                  ▼          S4002
        ╱─────────────────────────────╲
       ╱  NON-STATIONARY TIME PERIOD   ╲    NO
       ╲  IS GREATER THAN OR EQUAL TO   ╱─────────────┐
        ╲ PREDETERMINED TIME PERIOD?   ╱              │
         ╲─────────────────────────────╱               │
                  │ YES                                 │
                  ▼      S4004              S4006       │
        ┌─────────────────────┐   ┌────────────────────────┐
        │ CALIBRATION LEVEL = 0│   │ NON-STATIONARY TIME    │
        └─────────────────────┘   │ PERIOD + = 1           │
                  │               └────────────────────────┘
                  │                          │
                  ▼◄─────────────────────────┘
        ┌─────────────────────┐
        │    END S1028        │
        └─────────────────────┘
```

[ FIG. 16 ]

[ FIG. 17 ]

DIFFERENCE CALCULATION

[ FIG. 18 ]

COORDINATE CONVERSION

GRAVITY DIRECTION

[ FIG. 19 ]

GRAVITY DIRECTION

$\overrightarrow{ER}$ : ROTATION VECTOR OF $R_{er\_g}$

$\overrightarrow{ER_h}$ : HORIZONTAL PROJECTION COMPONENT OF $\overrightarrow{ER}$

[ FIG. 20 ]

EP 3 792 594 A1

START

VARIABLE INITIALIZATION — S1000

GNSS ACCURACY EVALUATION — S1002

GNSS ACCURACY IS LESS THAN OR EQUAL TO PREDETERMINED ACCURACY AND CALIBRATION LEVEL ≥ 2? — S1004
NO / YES

BIAS-REMOVAL PROCESS — S1006

NORTH-DIRECTION-ESTIMATION PROCESS — S1008

SAMPLE ACCELERATION/ANGULAR VELOCITY — S1012

SAMPLE CAPTURED IMAGE — S1013

DIRECTION-CHANGE CALCULATION — S1014

TRAVELING-DETECTION CALCULATION — S1016

DURING TRAVELING? — S1018
YES / NO

STATIONARY? — S1022
YES / NO

NON-TRAVELING TIME PERIOD = 0 — S1024

TRAVELING TIME PERIOD = 0 — S1026

CALIBRATION PROCESS — S1020

NON-TRAVELING PROCESS — S1028

51

[ FIG. 21 ]

```
                    ┌──────────────────────┐
                    │   START  S3002        │
                    └──────────────────────┘
                              │
                              ▼
         ┌────────────────────────────────┐
         │ ESTIMATE FIFTH ATTITUDE        │
         │ ON THE BASIS OF SAMPLED        │─── S5002
         │ ANGULAR VELOCITY               │
         └────────────────────────────────┘
                              │
                              ▼
         ┌────────────────────────────────┐
         │ ESTIMATE GRAVITY ON THE BASIS  │─── S5004
         │ OF SAMPLED ACCELERATION        │
         └────────────────────────────────┘
                              │
                              ▼
         ┌────────────────────────────────┐
         │ ESTIMATE SIXTH ATTITUDE ON     │
         │ THE BASIS OF SAMPLED CAPTURED  │─── S5006
         │ IMAGE AND ESTIMATED GRAVITY    │
         └────────────────────────────────┘
                              │
                              ▼
         ┌────────────────────────────────┐
         │ REMOVE MOTION COMPONENT ON     │
         │ THE BASIS OF ESTIMATED FIFTH   │─── S5008
         │ ATTITUDE AND SIXTH ATTITUDE    │
         └────────────────────────────────┘
                              │
                              ▼
         ┌────────────────────────────────┐
         │ ATTITUDE SYNCHRONIZATION       │─── S5010
         │ PROCESS                        │
         └────────────────────────────────┘
                              │
                              ▼
                    ┌──────────────────────┐
                    │   END  S3002          │
                    └──────────────────────┘
```

[ FIG. 22 ]

ATTITUDE

FIFTH ATTITUDE

SIXTH ATTITUDE

TIME

〈EXAMPLE IN WHICH CORRELATION IS LOW〉

ATTITUDE

FIFTH ATTITUDE

SIXTH ATTITUDE

TIME

〈EXAMPLE IN WHICH CORRELATION IS HIGH〉

[ FIG. 23 ]

```
                    ┌─────────────────────┐
                    │    START  S3002     │
                    └─────────────────────┘
                              │
                              ▼
                         ╱‾‾‾‾‾‾‾╲  ～S5000
                       ╱ TRAVELING ╲         YES
                      ◁  BY VEHICLE? ▷──────────────────────┐
                       ╲           ╱                         │
                         ╲_____╱                           │
                           │NO                               │
                           ▼                                 │
              ┌─────────────────────────┐                    │
              │ ESTIMATE FIFTH ATTITUDE │                    │
              │ ON THE BASIS OF SAMPLED │～S5002             │
              │ ANGULAR VELOCITY        │                    │
              └─────────────────────────┘                    │
                           │                                 │
                           ▼                                 │
              ┌─────────────────────────┐                    │
              │ ESTIMATE GRAVITY ON THE BASIS │～S5004        │
              │ OF SAMPLED ACCELERATION  │                   │
              └─────────────────────────┘                    │
                           │   ～S5006                        │
                           ▼                          ～S5012 │
              ┌─────────────────────────┐   ┌─────────────────────────┐
              │ ESTIMATE SIXTH ATTITUDE ON │  │ ESTIMATE ATTITUDE ON   │
              │ THE BASIS OF SAMPLED CAPTURED │ │ THE BASIS OF SAMPLED │
              │ IMAGE AND ESTIMATED GRAVITY │  │ INERTIAL DATA         │
              └─────────────────────────┘   └─────────────────────────┘
                           │   ～S5008                  │   ～S5014
                           ▼                            ▼
              ┌─────────────────────────┐   ┌─────────────────────────┐
              │ REMOVE MOTION COMPONENT ON │ │ REMOVE MOTION COMPONENT │
              │ THE BASIS OF ESTIMATED FIFTH │ │ ON THE BASIS OF        │
              │ ATTITUDE AND SIXTH ATTITUDE │  │ ESTIMATED ATTITUDE     │
              └─────────────────────────┘   └─────────────────────────┘
                           │                            │
                           ▼                            │
              ┌─────────────────────────┐               │
              │ ATTITUDE SYNCHRONIZATION │～S5010        │
              │ PROCESS                  │               │
              └─────────────────────────┘               │
                           │◀──────────────────────────┘
                           ▼
                    ┌─────────────────────┐
                    │     END  S3002      │
                    └─────────────────────┘
```

[ FIG. 24 ]

EP 3 792 594 A1

10-3,10-4

DRONE

140-3,140-4

CONTROLLER

144-3,144-4

NORTH-SEEKING
PROCESS
CONTROLLER

120

INERTIAL
MEASUREMENT
SECTION

142-3,142-4

ATTITUDE CONTROLLER

1422-3,1422-4

DRONE
ATTITUDE
CONTROLLER

160

STORAGE

130

COMMUNICATION
SECTION

1424-3,1424-4

IMU ATTITUDE
CONTROLLER

[ FIG. 25 ]

<POSITION 1>

<POSITION 2>

⬆ : FRONT DIRECTION OF DRONE

↑ : FRONT DIRECTION OF IMU

[ FIG. 26 ]

<POSITION 1>

⬆ : FRONT DIRECTION OF DRONE

↑ : FRONT DIRECTION OF IMU

<POSITION 2>

[ FIG. 27 ]

[ FIG. 28 ]

10-4

20

22

<POSITION 1>

10-4

20

22

<POSITION 2>

NORTH

10-4

20

22

<POSITION 3>

⬆ : FRONT DIRECTION
      OF DRONE

↑ : FRONT DIRECTION
      OF ROTATION IMU

↑ : FRONT DIRECTION
      OF AIRFRAME IMU

EP 3 792 594 A1

[ FIG. 29 ]

EP 3 792 594 A1

[ FIG. 30 ]

```
                    ┌─────────────────────┐
                    │    START  S6010     │
                    └─────────────────────┘
                              │
                              ▼                    ～S7002
                    ╱─────────────────╲
                   ╱    MEASUREMENT     ╲          YES
              ────┤ OF ROTATION COMPONENT IS ├──────────────┐
                   ╲    COMPLETED?    ╱                      │
                    ╲───────────────╱                        │
                          │ NO                               │
                          ▼        ～S7004                    │
              ┌───────────────────────────┐                 │
              │  NUMBER OF MEASUREMENT-    │                 │
              │  COMPLETED ATTITUDES + 1   │                 │
              └───────────────────────────┘                 │
                          │        ～S7006                    │
                          ▼                                   │
              ┌───────────────────────────┐                 │
              │  SAVE CURRENT ATTITUDE VALUE │               │
              └───────────────────────────┘                 │
                          │        ～S7008                    │
                          ▼                                   │
         NO      ╱──────────────────╲                        │
      ┌─────────┤       ABS          ├                       │
      │          │ (AZIMUTH CHANGE    │                      ▼
      │          │ IN ROTATION IMU - SAVED │                ～S7014
      │          │ VALUE) < 45     │      ╱──────────────────╲
      │          │   DEGREES?      │     ╱       ABS          ╲     NO
      │           ╲──────────────╱     ┤  (AZIMUTH CHANGE      ├──────┐
      │               │ YES             │ IN ROTATION IMU - SAVED │    │
      │               │                 │   VALUE) < 45    │         │
      │               │                  ╲    DEGREES?    ╱          │
      │               │                   ╲──────────────╱           │
      │               │                       │ YES                  │
      │               │                       ▼      ～S7016          │
      │               │            ┌───────────────────────────┐    │
      │               │            │ MEASUREMENT TIME PERIOD + 1│    │
      │               │            └───────────────────────────┘    │
      │               │                       │                      ▼  ～S7018
      │               ▼      ～S7010            │         ┌───────────────────────────┐
      │    ┌───────────────────────┐          │         │ MEASUREMENT TIME PERIOD = 0│
      │    │   ROTATE ROTATION      │          │         └───────────────────────────┘
      │    │   IMU 90 DEGREES       │          │                      │
      │    └───────────────────────┘          │                      │
      │               │      ～S7012            │                      │
      └───────────────▼                        │                      │
          ┌───────────────────────────┐       │                      │
          │ MEASUREMENT TIME PERIOD = 0│       │                      │
          └───────────────────────────┘       │                      │
                      │◄─────────────────────────────────────────────┘
                      ▼
            ┌─────────────────────┐
            │     END  S6010      │
            └─────────────────────┘
```

[ FIG. 31 ]

START S6020

↓

S8002
ACQUIRE GNSS ACCURACY

↓

S8004
GNSS ACCURACY IS GREATER THAN OR EQUAL TO PREDETERMINED ACCURACY? — NO

YES ↓

S8006
DETERMINE THAT GNSS ACCURACY IS HIGH

S8008
DETERMINE THAT GNSS ACCURACY IS LOW

↓

S8010
ACQUIRE GEOMAGNETISM ACCURACY

↓

S8012
GEOMAGNETISM ACCURACY IS GREATER THAN OR EQUAL TO PREDETERMINED ACCURACY? — NO

YES ↓

S8014
DETERMINE THAT GEOMAGNETISM ACCURACY IS HIGH

S8016
DETERMINE THAT GEOMAGNETISM ACCURACY IS LOW

↓

END S6020

[ FIG. 32 ]

EP 3 792 594 A1

FIG. 32

DRONE — 10-5

CONTROLLER — 140-5

NORTH-SEEKING PROCESS CONTROLLER — 144-5

INERTIAL MEASUREMENT SECTION — 120

IMAGING SECTION — 170

ATTITUDE CONTROLLER — 142-5

DRONE ATTITUDE CONTROLLER — 1422-5

COMMUNICATION SECTION — 130

IMU ATTITUDE CONTROLLER — 1424-5

STORAGE — 160

CAMERA ATTITUDE CONTROLLER — 1426-5

[ FIG. 33 ]

EP 3 792 594 A1

<POSITION 1>

<POSITION 2>

<POSITION 3>

: FRONT DIRECTION OF DRONE

: FRONT DIRECTION OF IMU

[ FIG. 34 ]

EP 3 792 594 A1

START

CHECK IMAGING — S9002

S9004
IMAGED? — NO
YES

ELAPSED TIME PERIOD AFTER IMAGING = 0 — S9006

S9008
100 SECONDS HAVE ELAPSED SINCE LAST IMAGING? — NO

YES

PRIORITY SWITCHING TO IMAGING PROCESS — S9010

PRIORITY SWITCHING TO MEASUREMENT PROCESS — S9012

ELAPSED TIME PERIOD AFTER IMAGING + 0.01 SECOND — S9014

S9016
MEASUREMENT PROCESS IS PRIORITIZED? — NO
YES

MAIN PROCESS (WITH IMU-ROTATION CONTROL) — S9018

MAIN PROCESS (WITHOUT IMU-ROTATION CONTROL) — S9020

S9022
CALIBRATION COMPLETED? — NO
YES

PRIORITY SWITCHING TO IMAGING PROCESS — S9024

[ FIG. 35 ]

24A
124

24B
124

[ FIG. 36 ]

EP 3 792 594 A1

```
                    ┌──────────┐
                    │  START   │
                    └────┬─────┘
                         │           S1000
                         ▼
              ┌────────────────────────┐
              │ VARIABLE INITIALIZATION │
              └────────────┬───────────┘
                           │            S1002
                           ▼
              ┌────────────────────────┐                    ┌──────────────────────────────┐
              │ GNSS ACCURACY EVALUATION│                    │ DIRECTION-CHANGE CALCULATION │ S1014
              └────────────┬───────────┘                    └───────────────┬──────────────┘
                           │            S1004                                │  S1016
                           ▼                                                 ▼
         NO   ╱ GNSS ACCURACY IS LESS ╲                      ┌──────────────────────────────┐
      ┌──────   THAN OR EQUAL TO                             │  TRAVELING-DETECTION          │
      │        PREDETERMINED ACCURACY AND                    │  CALCULATION                  │
      │        CALIBRATION LEVEL ≥ 2? ╲                      └───────────────┬──────────────┘
     (A)       ╲_____╱                                     │  S1018
                          │ YES   S1006                            DURING TRAVELING?  NO
                          ▼                                   ╱──────────────────────────╲──────┐
              ┌────────────────────────┐                     ╲──────────────────────────╱       │  S1022
              │  BIAS-REMOVAL PROCESS  │                            │ YES                    STATIONARY?  NO
              └────────────┬───────────┘                            │                 ╱──────────────────╲─────┐
                           │            S1008                       │                 ╲──────────────────╱     │
                           ▼                                        │                       │ YES   S1024       │
              ┌────────────────────────┐                           │            ┌──────────────────────┐      │
              │ NORTH-DIRECTION-ESTIMATION│                        │            │ NON-TRAVELING TIME    │      │  S1026
              │ PROCESS                │                           │            │ PERIOD = 0            │      │
              └────────────┬───────────┘                          │            └───────────┬──────────┘  ┌──────────────────────┐
     (B)───────────────────┤                                      │                        │             │ TRAVELING TIME PERIOD = 0│
                           │            S1012                      │◄───────────────────────┘             └───────────┬──────────┘
                           ▼                                      │  S1020                                            │  S1028
              ┌────────────────────────┐                  ┌──────────────────────┐                       ┌──────────────────────┐
              │ SAMPLE ACCELERATION/ANGULAR│              │ CALIBRATION PROCESS  │                       │ NON-TRAVELING PROCESS │
              │ VELOCITY               │                  └──────────────────────┘                       └──────────────────────┘
              └────────────┬───────────┘
                           │            S1013
                           ▼
              ┌────────────────────────┐
              │ SAMPLE CAPTURED IMAGE  │
              └────────────────────────┘
```

[ FIG. 37 ]

[ FIG. 38 ]

900 INFORMATION PROCESSING APPARATUS

901 CPU
903 ROM
905 RAM
907 INPUT DEVICE
909 DISPLAY DEVICE
911 AUDIO OUTPUT DEVICE
913 STORAGE DEVICE
915 COMMUNICATION DEVICE

## INTERNATIONAL SEARCH REPORT

| International application No. |
|---|
| PCT/JP2019/016338 |

A. CLASSIFICATION OF SUBJECT MATTER

Int.Cl.  G01C17/38(2006.01)i, G01C21/26(2006.01)i, G01C21/28(2006.01)i

According to International Patent Classification (IPC) or to both national classification and IPC

B. FIELDS SEARCHED

Minimum documentation searched (classification system followed by classification symbols)

Int.Cl.  G01C17/38, G01C21/26, G01C21/28

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2011-245285 A (NATIONAL INSTITUTE OF ADVANCED INDUSTRIAL SCIENCE AND TECHNOLOGY) 08 December 2011, paragraphs [0044]–[0046] (Family: none) | 1-2, 14, 16, 19-20 |
| A | | 3-13, 15, 17-18 |
| Y | JP 2000-249552 A (JAPAN AVIATION ELECTRONICS INDUSTRY LTD.) 14 September 2000, paragraphs [0014]–[0025] (Family: none) | 1-2, 14, 16, 19-20 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 July 2019 (04.07.2019) | 16 July 2019 (16.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013057601 A